# EUROPEAN PATENT APPLICATION

(11) **EP 4 661 468 A1**
(43) Date of publication of application: **10.12.2025**
(21) Application number: 24755926.3
(22) Date of filing: 24.01.2024
(51) Int. Cl.: H04W 24/02, H04W 72/04, H04B 7/0456

(54) **COMMUNICATION METHOD AND APPARATUS**

(30) Priority: 16.02.2023 CN 202310166670
(71) Applicant: Huawei Technologies Co., Ltd., Shenzhen, Guangdong 518129 (CN)
(72) Inventor: XUAN, Yidi, Shenzhen, Guangdong 518129 (CN); GUAN, Lei, Shenzhen, Guangdong 518129 (CN); LI, Ruijie, Shenzhen, Guangdong 518129 (CN)
(74) Representative: Thun, Clemens
(86) International application number: PCT/CN2024/073859
(87) International publication number: WO 2024/169551

(57) **Abstract**

A communication method and apparatus are provided, and relate to the field of wireless communication. In the method, a network device sends a first message to a terminal, where the first message includes configuration information including K1 resource configurations and/or M1 codebook configurations, the configuration information includes a report configuration type, the report configuration type is used to configure reported time domain behavior including periodic reporting or semi-persistent reporting; the network device sends, to the terminal, first indication information indicative of a first configuration in the configuration information, and the first configuration includes a first resource configuration in the K1 resource configurations, and/or the first configuration includes a first codebook configuration in the M1 codebook configurations; and the terminal measures channel state information based on the first configuration. According to the method, resource overheads of configuration or reconfiguration for channel state information measurement and reporting can be reduced.

## Description

### CROSS-REFERENCE TO RELATED APPLICATIONS

This application claims priority to Chinese Patent Application No. 202310166670.X, filed with the China National Intellectual Property Administration on February 16, 2023 and entitled "COMMUNICATION METHOD AND APPARATUS", which is incorporated herein by reference in its entirety.

### TECHNICAL FIELD

Embodiments of this application relate to the field of wireless communication, and in particular, to a communication method and apparatus.

### BACKGROUND

With evolution of cellular communication technologies, spectrums being used are increasingly wider, a number of transmit antennas of a network device is growing, and power consumption of a base station is rising. Therefore, "low carbon" has attracted increasing attention in communication networks. Currently, power consumption of the network device may be reduced by disabling radio frequency channels of the network device. Disabling radio frequency channels may also be understood as disabling physical antenna ports. Antenna disabling may last from dozens of milliseconds to more than 100 milliseconds. After some antennas of the network device are disabled, a number of antennas for sending reference signals may decrease accordingly, and logical ports of the reference signal may change.

Channel state information-reference signals are used as an example. When antennas of the network device are disabled, the network device needs to reconfigure, for a terminal, channel state information (channel state information, CSI) report configurations and channel state information-reference signal resource configurations associated with the channel state information-reference signal report configurations, to ensure accurate channel state information measured and reported by the terminal. After the network device cancels antenna disabling, the network device also needs to reconfigure, for the terminal, channel state information-reference signal report configurations and channel state information-reference signal resource configurations associated with the channel state information-reference signal report configurations, to ensure accurate channel state information measured and reported by the terminal.

When antennas of the network device are disabled, antenna disabling may last from dozens of milliseconds to more than 100 milliseconds. In this case, the channel state information-reference signal report configurations and the channel state information-reference signal resource configurations associated with the channel state information-reference signal report configurations need to be frequently updated, resulting in high signaling overheads for the network device.

### SUMMARY

Embodiments of this application provide a communication method and apparatus, to reduce reconfiguration overheads of channel state information-reference signal report configurations.

According to a first aspect, a communication method is provided, and is applied to a terminal apparatus. The method includes: The terminal apparatus receives a first message, where the first message includes configuration information including K1 resource configurations and/or M1 codebook configurations, the configuration information includes a report configuration type, the report configuration type is used to configure reported time domain behavior, the time domain behavior includes periodic reporting or semi-persistent reporting, K1 is an integer greater than 1, and M1 is an integer greater than 1; the terminal apparatus receives first indication information, where the first indication information indicates a first configuration in the configuration information; and the first configuration includes a first resource configuration in the K1 resource configurations, and/or the first configuration includes a first codebook configuration in the M1 codebook configurations; and the terminal apparatus determines first channel state information based on the first configuration.

A network apparatus may configure a channel state information report configuration for the terminal apparatus, and may further reconfigure the channel state information report configuration. The channel state information report configuration is associated with a channel state information resource configuration, and the channel state information report configuration may further include a codebook configuration. In the foregoing implementation, the channel state information report configuration may be reconfigured via the first indication information. Because the first indication information may indicate a part of a plurality of resource configurations and/or indicate a part of a plurality of codebook configurations, reconfiguration overheads of the channel state information report configuration can be reduced. In a possible implementation, the first indication information is received at a moment T0. The method further includes: determining channel state information based on a second configuration in S1 time units after the moment T0, where S1 is an integer greater than or equal to 0; or determining the channel state information based on the second configuration in S1 time units after a moment T1, where S1 is an integer greater than or equal to 0, and the moment T1 is a moment at which acknowledgment information of the first indication information is sent. The second configuration includes a second resource configuration in the K1 resource configurations, and/or the second configuration includes a second codebook configuration in the M1 codebook configurations.

In a possible implementation, the second configuration is a configuration used by the terminal to perform channel measurement before the first indication information is received.

In the foregoing implementation, before receiving the first indication information, the terminal device may measure the channel state information based on the second configuration, and after receiving the first indication information, may measure the channel state information based on the first configuration indicated by the first indication information. In this way, resource configuration and/or codebook configuration switching can be implemented via the first indication information.

Further, a specific delay may be required during resource configuration and/or codebook configuration switching, to ensure that the channel state information of the terminal apparatus can be normally measured. Therefore, in the foregoing implementation, in the S1 time units after the moment T0 or in the S1 time units after the moment T1, the second configuration may remain effective, the first configuration does not take effect temporarily, and the terminal still determines the channel state information based on the second configuration.

In a possible implementation, the determining the channel state information based on the first configuration includes: determining the first channel state information based on the first configuration after S1+S2 time units after the moment T0, where S2 is an integer greater than or equal to 0; or determining the first channel state information based on the first configuration after S1+S2 time units after the moment T1, where S2 is an integer greater than or equal to 0.

In the foregoing implementation, after the terminal apparatus receives the first indication information, the first configuration indicated by the first indication information does not take effect immediately, but takes effect after a specific time. In other words, the first configuration takes effect after the S1+S2 time units after T0 or it. In this way, time can be reserved for the terminal apparatus to perform a resource configuration and/or codebook configuration related operation terminal apparatus.

Optionally, the method further includes: skipping measuring the channel state information from the S1 time units to S1+S2 time units after the moment T0; or skipping measuring the channel state information from the S1 time units to S1+S2 time units after the moment T1.

In the foregoing implementation, the time period from the S1 time units after T0 or T1 to the S1+S2 time units after T0 or T1 may also be understood as a switching time. The terminal apparatus completes an operation of switching from an original configuration (the second configuration) to a new configuration (the second configuration) within the switching delay time, without measuring the channel state information. Further, the terminal apparatus does not report the channel state information. In this way, channel state information measurement behavior of the terminal apparatus when the terminal apparatus switches from the original configuration to the new configuration can be standardized, to ensure that the channel state information of the terminal apparatus is normally measured.

In a possible implementation, the second resource configuration is a default resource configuration in the K1 resource configurations, and the second codebook configuration is a default codebook configuration in the M1 codebook configurations; or the second configuration is indicated by second indication information, and a receiving time of the second indication information is earlier than that of the first indication information.

In a possible implementation, the determining the first channel state information based on the first configuration includes: determining the first channel state information based on a first reference signal, a second reference signal, and the first configuration, where the first reference signal is a reference signal received in S3 time units before the first indication information, the second reference signal is a reference signal received after the first indication information, both the first reference signal and the second reference signal are reference signals received based on the first configuration, and S3 is a positive integer.

In a possible implementation, the first resource configuration indicates one or more of the following: information indicative of a non-zero power channel state information-reference signal resource set; information indicative of a channel measurement resource group, where the channel measurement resource group is one or more channel resource groups in the non-zero power channel state information-reference signal resource set, and the channel measurement resource group includes one or more reference signal resources; information indicative of a number of ports; information indicative of a subcarrier occupied by a channel state information-reference signal resource in one physical resource block (physical resource block, PRB); information indicative of a symbol occupied by a channel state information-reference signal resource in one slot; information indicative of a code division multiplexing type; information indicative of a channel state information-reference signal power control offset; and information indicative of a synchronization signal power control offset.

In a possible implementation, the first indication information further indicates a third configuration including a third resource configuration and/or a third codebook configuration. The method further includes: determining second channel state information based on the third configuration.

In a possible implementation, the first message includes K2 resource configurations and M2 codebook configurations, the K2 resource configurations include the third resource configuration, and the M2 codebook configurations include the third codebook configuration.

In a possible implementation of the terminal apparatus, the first channel state information corresponds to reporting of the first channel state information, or the first channel state information is included in a reporting instance (reporting instance) reported via the first channel state information. The second channel state information corresponds to reporting of the second channel state information, or the second channel state information is included in a reporting instance (reporting instance) reported via the second channel state information.

In the foregoing manner, the first resource configuration and the first codebook configuration may be associated with (or included in) a first channel state information report configuration, and the third resource configuration and the third codebook configuration may be associated with (or included in) a second channel information report configuration. In this way, the first indication information may indicate configuration parameters of a plurality of channel state information report configurations. This can reduce signaling overheads.

According to a second aspect, a communication method is provided, and is applied to a network apparatus. The method may include: The network apparatus sends a first message to a terminal, where the first message includes configuration information including K1 resource configurations and/or M1 codebook configurations, the configuration information includes a report configuration type, the report configuration type is used to configure reported time domain behavior, the time domain behavior includes periodic reporting or semi-persistent reporting, K1 is an integer greater than 1, and M1 is an integer greater than 1; and the network apparatus sends first indication information to the terminal, where the first indication information indicates a first configuration in the configuration information; and the first configuration includes a first resource configuration in the K1 resource configurations, and/or the first configuration includes a first codebook configuration in the M1 codebook configurations.

In a possible manner, the network apparatus first channel state information, where the first channel state information is determined by the terminal based on the first configuration.

In a possible implementation, before sending the first indication information to the terminal, the method further includes: sending the second indication information to the terminal indicative of a second configuration; and the second configuration includes a second resource configuration in the K1 resource configurations, and/or the second configuration includes a second codebook configuration in the M1 codebook configurations.

In a possible implementation, the first resource configuration indicates one or more of the following: information indicative of a non-zero power channel state information-reference signal resource set; information indicative of a channel measurement resource group, where the channel measurement resource group is one or more channel resource groups in the non-zero power channel state information-reference signal resource set, and the channel measurement resource group includes one or more reference signal resources; information indicative of a number of ports; information indicative of a subcarrier occupied by a channel state information-reference signal resource in one PRB; information indicative of a symbol occupied by a channel state information-reference signal resource in one slot; information indicative of a code division multiplexing type; information indicative of a channel state information-reference signal power control offset; and information indicative of a synchronization signal power control offset.

In a possible implementation, the first indication information further indicates a third configuration including a third resource configuration and/or a third codebook configuration.

In a possible implementation, the first message includes K2 resource configurations and M2 codebook configurations, the K2 resource configurations include the third resource configuration, and the M2 codebook configurations include the third codebook configuration.

According to a third aspect, a communication method is provided. The method is applied to a terminal apparatus. The method may include: The terminal apparatus receives a first message, where the first message includes configuration information including M1 codebook configurations, the configuration information includes a report configuration type, the report configuration type is used to configure reported time domain behavior, the time domain behavior is aperiodic reporting, and M1 is an integer greater than 1; the terminal apparatus receives first indication information, where the first indication information indicates a first configuration in the configuration information, and the first configuration includes a first codebook configuration in the M1 codebook configurations; and the terminal apparatus determines first channel state information based on the first configuration.

In a possible implementation, the configuration information further includes K1 resource configurations, the first configuration further includes a first resource configuration in the K1 resource configurations, and K1 is an integer greater than 1.

In a possible implementation, that the first indication information indicates the first configuration in the configuration information includes: The first indication information indicates a first aperiodic channel state information trigger state, and the first aperiodic channel state information trigger state indicates the first configuration in the configuration information.

In a possible implementation, that the first aperiodic channel state information trigger state indicates the first configuration in the configuration information includes: The first aperiodic channel state information trigger state includes an index of a first non-zero power channel state information-reference signal resource set and the first codebook configuration, and the first resource configuration is a configuration of the first non-zero power channel state information-reference signal resource set.

In a possible implementation, the determining the first channel state information based on the first configuration includes: determining the first channel state information based on a first reference signal, a second reference signal, and the first configuration, where the first reference signal is a reference signal received in S3 time units before the first indication information, the second reference signal is a reference signal received after the first indication information, both the first reference signal and the second reference signal are reference signals received based on the first configuration, and S3 is a positive integer.

In a possible implementation, the first resource configuration indicates one or more of the following: information indicative of a non-zero power channel state information-reference signal resource set; information indicative of a channel measurement resource group, where the channel measurement resource group is one or more channel resource groups in the non-zero power channel state information-reference signal resource set, and the channel measurement resource group includes one or more reference signal resources; information indicative of a number of ports; information indicative of a subcarrier occupied by a channel state information-reference signal resource in one PRB; information indicative of a symbol occupied by a channel state information-reference signal resource in one slot; information indicative of a code division multiplexing type; information indicative of a channel state information-reference signal power control offset; and information indicative of a synchronization signal power control offset.

According to a fourth aspect, a communication method is provided, and is applied to a network apparatus. The method may include: The network apparatus sends a first message to a terminal apparatus, where the first message includes configuration information including M1 codebook configurations, the configuration information includes a report configuration type, the report configuration type is used to configure reported time domain behavior, the time domain behavior includes aperiodic reporting, and M1 is an integer greater than 1; and the network apparatus sends first indication information to the terminal apparatus, where the first indication information indicates a first configuration in the configuration information, and the first configuration includes a first codebook configuration in the M1 codebook configurations.

In a possible implementation, the network apparatus receives first channel state information, where the first channel state information is determined by the terminal apparatus based on the first configuration.

In a possible implementation, the configuration information further includes K1 resource configurations, the first configuration further includes a first resource configuration in the K1 resource configurations, and K1 is an integer greater than 1.

In a possible implementation, that the first indication information indicates the first configuration in the configuration information includes: The first indication information indicates a first aperiodic channel state information trigger state, and the first aperiodic channel state information trigger state indicates the first configuration in the configuration information.

In a possible implementation, that the first aperiodic channel state information trigger state indicates the first configuration in the configuration information includes: The first aperiodic channel state information trigger state includes an index of a first non-zero power channel state information-reference signal resource set and the first codebook configuration, and the first resource configuration is a configuration of the first non-zero power channel state information-reference signal resource set.

In a possible implementation, the first resource configuration indicates one or more of the following: information indicative of a non-zero power channel state information-reference signal resource set; information indicative of a channel measurement resource group, where the channel measurement resource group is one or more channel resource groups in the non-zero power channel state information-reference signal resource set, and the channel measurement resource group includes one or more reference signal resources; information indicative of a number of ports; information indicative of a subcarrier occupied by a channel state information-reference signal resource in one PRB; information indicative of a symbol occupied by a channel state information-reference signal resource in one slot; information indicative of a code division multiplexing type; information indicative of a channel state information-reference signal power control offset; and information indicative of a synchronization signal power control offset.

According to a fifth aspect, a communication method is provided. The method is applied to a terminal apparatus. The method may include: The terminal apparatus receives a first message, where the first message includes configuration information including K1 resource configurations and M1 codebook configurations, the configuration information includes a report configuration type, the report configuration type is used to configure reported time domain behavior, the time domain behavior is aperiodic reporting, K1 is an integer greater than 1, and M1 is an integer greater than 1; the terminal apparatus receives first indication information, where the first indication information indicates a first configuration in the configuration information, the first configuration includes a first resource configuration in the K1 resource configurations; and the terminal apparatus determines first channel state information based on the first resource configuration and a first codebook configuration, where the first codebook configuration is a default codebook configuration in the M1 codebook configurations.

In a possible implementation, when the first configuration includes the first resource configuration in the K1 resource configurations and does not include any codebook configuration, the terminal apparatus determines the first channel state information based on the first resource configuration and the first codebook configuration.

According to a sixth aspect, a communication method is provided, and is applied to a network apparatus. The method includes: The network apparatus sends a first message, where the first message includes configuration information including K1 resource configurations and/or M1 codebook configurations, the configuration information includes a report configuration type, the report configuration type is used to configure reported time domain behavior, the time domain behavior includes aperiodic reporting, K1 is an integer greater than 1, and M1 is an integer greater than 1; and the network apparatus sends first indication information, where the first indication information indicates a first configuration in the configuration information, and the first configuration includes a first resource configuration in the K1 resource configurations.

In a possible implementation, the network apparatus receives first channel state information, where the first channel state information is determined by a terminal based on the first resource configuration and a first codebook configuration, and the first codebook configuration is a default codebook configuration in the M1 codebook configurations.

According to a seventh aspect, a communication method is provided. The method is applied to a terminal apparatus. The method includes: The terminal apparatus receives a first channel state information report configuration, receives third indication information, and reports channel state information based on the third indication information and the first channel state information report configuration.

In a possible antenna disabling case, antenna disabling does not affect a (logical) antenna port, in other words, an antenna port used by a network apparatus to send a channel state information-reference signal remains unchanged. In this case, the terminal apparatus does not need to switch a channel state report configuration, and only needs to update and report the channel state information. A function of the third indication information is reconfiguration of a channel state information report configuration, and a reconfigured channel state information report configuration is the same as that before the reconfiguration. In the foregoing manner, after receiving the third indication information, the terminal may report the channel state information based on the first channel state information report configuration. This improves flexibility of the channel state information report configuration compared with re-indicating the channel state information report configuration via radio resource control (radio resource control, RRC) signaling.

In a possible implementation, the third indication information may be a 1-bit indication field. Reconfiguration of the channel state information report configuration is indicated via the 1-bit indication field, so that overheads can be reduced.

In a possible implementation, the first channel state information report configuration is associated with a first channel state information resource configuration, and the first channel state information resource configuration indicates a first channel state information-reference signal resource. Determining the channel state information based on the third indication information and the first channel state information report configuration includes: receiving L first channel state information-reference signals on the first channel state information-reference signal resource, and determining the channel state information based on T first channel state information-reference signals that are in the L first channel state information-reference signals and that are received after the third indication information is received.

In a possible implementation, after receiving the third indication information, if the terminal apparatus receives, before a channel state information reference resource, at least one channel state information-reference signal transmission occasion used for channel measurement and a channel state information-reference signal used for interference measurement and/or a channel state information-interference measurement occasion, the terminal apparatus determines the channel state information based on the first channel state information report configuration. Otherwise, the terminal device does not determine the channel state information based on the first report configuration. In other words, if the terminal receives, within a time period from a moment at which the third indication information is received to a moment at which the channel state information reference resource is received, the at least one channel state information-reference signal transmission occasion used for channel measurement and the channel state information-reference signal used for interference measurement and/or channel state information-interference measurement, the terminal determines the channel state information based on the first report configuration. Otherwise, the terminal device does not determine the channel state information based on the first report configuration.

In a possible implementation, the third indication information indicates reconfiguration of the first channel state information report configuration, and a reconfigured first channel state information report configuration is completely the same as that before the reconfiguration.

According to an eighth aspect, a communication method is provided, and is applied to a network apparatus. The method includes: The network apparatus sends a first channel state information report configuration to a terminal apparatus, sends third indication information to the terminal apparatus, and receives channel state information sent by the terminal apparatus, where the channel state information is determined by the terminal apparatus based on the third indication information and the first channel state information report configuration.

In a possible implementation, the first channel state information report configuration is associated with a first channel state information resource configuration, and the first channel state information resource configuration indicates a first channel state information-reference signal resource. Determining the channel state information based on the third indication information and the first report configuration includes: receiving L first channel state information-reference signals on the first channel state information-reference signal resource, and determining the channel state information based on T first channel state information-reference signals that are in the L first channel state information-reference signals and that are received after the third indication information is received.

In a possible implementation, the third indication information indicates reconfiguration of the first channel state information report configuration, and a reconfigured first channel state information report configuration is completely the same as that before the reconfiguration.

According to a ninth aspect, a communication apparatus is provided, and includes a processing unit and a transceiver unit. The transceiver unit is configured to: receive a first message, where the first message includes configuration information including K1 resource configurations and/or M1 codebook configurations, the configuration information includes a report configuration type, the report configuration type is used to configure reported time domain behavior, the time domain behavior includes periodic reporting or semi-persistent reporting, K1 is an integer greater than 1, and M1 is an integer greater than 1; and receive first indication information, where the first indication information indicates a first configuration in the configuration information; and the first configuration includes a first resource configuration in the K1 resource configurations, and/or the first configuration includes a first codebook configuration in the M1 codebook configurations. The processing unit is configured to determine first channel state information based on the first configuration.

According to a tenth aspect, a communication apparatus is provided, and includes a processing unit and a transceiver unit. The processing unit is configured to: send a first message to a terminal by using the transceiver unit, where the first message includes configuration information including K1 resource configurations and/or M1 codebook configurations, the configuration information includes a report configuration type, the report configuration type is used to configure reported time domain behavior, the time domain behavior includes periodic reporting or semi-persistent reporting, K1 is an integer greater than 1, and M1 is an integer greater than 1; and send first indication information to the terminal by using the transceiver unit, where the first indication information indicates a first configuration in the configuration information; and the first configuration includes a first resource configuration in the K1 resource configurations, and/or the first configuration includes a first codebook configuration in the M1 codebook configurations.

In a possible implementation, the transceiver unit is configured to receive first channel state information, where the first channel state information is determined by the terminal based on the first configuration.

According to an eleventh aspect, a communication apparatus is provided, and includes a processing unit and a transceiver unit. The transceiver unit is configured to receive a first message, where the first message includes configuration information including M1 codebook configurations, the configuration information includes a report configuration type, the report configuration type is used to configure reported time domain behavior, the time domain behavior is aperiodic reporting, and M1 is an integer greater than 1. The transceiver unit further receives first indication information, where the first indication information indicates a first configuration in the configuration information, and the first configuration includes a first codebook configuration in the M1 codebook configurations. The processing unit is configured to determine first channel state information based on the first configuration.

In a possible implementation, the configuration information further includes K1 resource configurations, the first configuration further includes a first resource configuration in the K1 resource configurations, and K1 is an integer greater than 1.

According to a twelfth aspect, a communication apparatus is provided, and includes a processing unit and a transceiver unit. The processing unit is configured to send a first message to a terminal apparatus by using the transceiver unit, where the first message includes configuration information including M1 codebook configurations, the configuration information includes a report configuration type, the report configuration type is used to configure reported time domain behavior, the time domain behavior is aperiodic reporting, and M1 is an integer greater than 1. The processing unit is further configured to send first indication information to the terminal apparatus by using the transceiver unit, where the first indication information indicates a first configuration in the configuration information, and the first configuration includes a first codebook configuration in the M1 codebook configurations.

In a possible implementation, the configuration information further includes K1 resource configurations, the first configuration further includes a first resource configuration in the K1 resource configurations, and K1 is an integer greater than 1.

In a possible implementation, the transceiver unit is configured to receive first channel state information, where the first channel state information is determined by the terminal apparatus based on the first configuration.

According to a thirteenth aspect, a communication apparatus is provided, and includes a transceiver unit and a processing unit. The transceiver unit is configured to receive a first message, where the first message includes configuration information including K1 resource configurations and M1 codebook configurations, the configuration information includes a report configuration type, the report configuration type is used to configure reported time domain behavior, the time domain behavior is aperiodic reporting, K1 is an integer greater than 1, and M1 is an integer greater than 1. The transceiver unit is further configured to receive first indication information, where the first indication information indicates a first configuration in the configuration information, and the first configuration includes a first resource configuration in the K1 resource configurations. The processing unit determines first channel state information based on the first resource configuration and a first codebook configuration, where the first codebook configuration is a default codebook configuration in the M1 codebook configurations.

In a possible implementation, when the first configuration includes the first resource configuration in the K1 resource configurations and does not include any codebook configuration, the processing unit determines the first channel state information based on the first resource configuration and the first codebook configuration.

According to a fourteenth aspect, a communication apparatus is provided, including a transceiver unit. The transceiver unit is configured to a first message, where the first message includes configuration information including K1 resource configurations and M1 codebook configurations, the configuration information includes a report configuration type, the report configuration type is used to configure reported time domain behavior, the time domain behavior is aperiodic reporting, K1 is an integer greater than 1, and M1 is an integer greater than 1; and send, for the network apparatus, first indication information, where the first indication information indicates a first configuration in the configuration information, and the first configuration includes a first resource configuration in the K1 resource configurations.

In a possible implementation, the transceiver unit is further configured to receive first channel state information, where the first channel state information is determined by a terminal based on the first resource configuration and a first codebook configuration, and the first codebook configuration is a default codebook configuration in the M1 codebook configurations.

According to a fifteenth aspect, a communication apparatus is provided, and includes a processing unit and a transceiver unit. The transceiver unit is configured to: receive a first channel state information report configuration, and receive third indication information. The processing unit is configured to determine channel state information based on the third indication information and the first channel state information report configuration.

According to a sixteenth aspect, a communication apparatus is provided, and includes a processing unit and a transceiver unit. The processing unit is configured to: send a first channel state information report configuration to a terminal apparatus by using the transceiver unit, and send third indication information to the terminal apparatus. Further, the transceiver unit is configured to receive channel state information sent by the terminal apparatus, where the channel state information is determined by the terminal apparatus based on the third indication information and the first channel state information report configuration.

According to a seventeenth aspect, a communication apparatus is provided. The communication apparatus may include one or more processors and one or more memories. The one or more memories store one or more programs, and when the program is executed by the one or more processors, the apparatus is caused to perform the method according to any one of the first aspect to the sixth aspect.

According to an eighteenth aspect, a chip system is provided. The chip system includes at least one chip and a memory, and the at least one chip is configured to: read and execute a program stored in the memory, to implement the method according to any one of the first aspect to the sixth aspect.

According to a nineteenth aspect, a readable storage medium is provided. The readable storage medium includes a program, and when the program is run on an apparatus, the apparatus is caused to perform the method according to any one of the first aspect to the sixth aspect.

According to a twentieth aspect, a program product is provided. When the program product runs on an apparatus, the apparatus is caused to perform the method according to any one of the first aspect to the sixth aspect.

### BRIEF DESCRIPTION OF DRAWINGS

FIG. 1 is a diagram of an architecture of a mobile communication system to which embodiments of this application are applied;
FIG. 2 is a diagram of a communication method applicable to a periodic or semi-persistent report configuration and applicable to first-type and second-type antenna disabling scenarios according to an embodiment of this application;
FIG. 3a is a diagram of configuration switching and validation according to an embodiment of this application;
FIG. 3b is another diagram of configuration switching and validation according to an embodiment of this application;
FIG. 4 is a diagram of a communication method applicable to an aperiodic report configuration and applicable to first-type and second-type antenna disabling scenarios according to an embodiment of this application;
FIG. 5 is a diagram of a communication method applicable to a periodic or semi-persistent report configuration and applicable to a second-type antenna disabling scenario according to an embodiment of this application;
FIG. 6 is a diagram of a structure of a communication apparatus according to an embodiment of this application; and
FIG. 7 is a diagram of a structure of another communication apparatus according to an embodiment of this application.

### DESCRIPTION OF EMBODIMENTS

Embodiments of this application may be applied to various communication systems such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WIMAX) communication system, and a 5th generation (5th generation, 5G) system or a new radio (new radio, NR) system, or applied to a future communication system, another similar communication system, or the like.

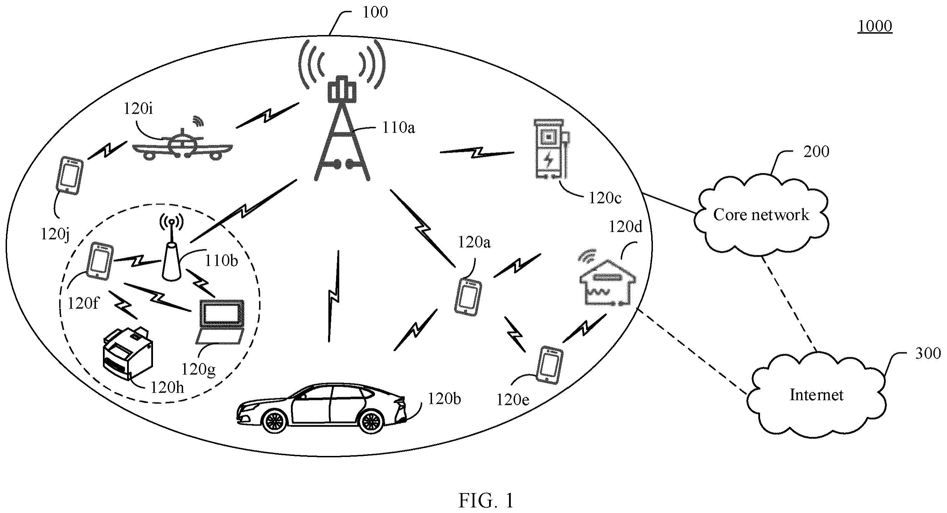

FIG. 1 is a diagram of an architecture of a communication system 1000 to which embodiments of this application are applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or a part of functions of the core network device and a part of functions of the radio access network device are integrated into one physical device. A wired or wireless manner may be used for connection between terminals and between radio access network devices. FIG. 1 is merely a diagram. The communication system may further include other network devices, for example, may further include a wireless relay device and a wireless backhaul device, which are not shown in FIG. 1.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or unit that completes a part of functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a part or all of functions of a physical layer. For specific descriptions of the foregoing protocol layers, refer to related technical specifications of the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. For ease of description, the following provides descriptions by using an example in which a network device is used as the radio access network device.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer having a wireless transceiver function, a wearable device, a vehicle, an uncrewed aerial vehicle, a helicopter, an airplane, a ship, a robot, a mechanical arm, a smart home device, or the like. A specific technology and a specific device form that are used by the terminal are not limited in embodiments of this application.

The network device and the terminal may be at a fixed location or may be movable. The network device and the terminal may be deployed on land, including an indoor or outdoor device, a handheld device, or a vehicle-mounted device; or may be deployed on water; or may be deployed on an airplane, a balloon, or an artificial satellite. Application scenarios of the network device and the terminal are not limited in embodiments of this application.

Roles of the network device and the terminal may be relative. For example, a helicopter or an unmanned aerial vehicle 120i in FIG. 1 may be configured as a mobile network device. For the terminal 120j that accesses the radio access network 100 through the unmanned aerial vehicle 120i, the unmanned aerial vehicle 120i is a network device. However, for the network device 110a, 120i is a terminal. In other words, 110a and 120i communicate with each other according to a wireless air interface protocol. Certainly, 110a and 120i may alternatively communicate with each other according to an interface protocol between network devices. In this case, relative to 110a, 120i is also a network device. Therefore, both the network device and the terminal may be collectively referred to as communication apparatuses. 110a and 110b in FIG. 1 may be referred to as communication apparatuses having functions of the network device, and 120a to 120j in FIG. 1 may be referred to as communication apparatuses having functions of the terminal.

Communication between a network device and a terminal, between network devices, or between terminals may be performed through a licensed spectrum, or may be performed through an unlicensed spectrum, or may be performed through both a licensed spectrum and an unlicensed spectrum. Communication may be performed through a spectrum below 6 gigahertz (gigahertz, GHz), or may be performed through a spectrum above 6 GHz. Alternatively, communication may be performed through both a spectrum below 6 GHz and a spectrum above 6 GHz. A spectrum resource used for wireless communication is not limited in embodiments of this application.

In embodiments of this application, the function of the network device may alternatively be performed by a module (for example, a chip) in the network device, or may be performed by a control subsystem including the function of the network device. The control subsystem including the function of the network device may be a control center in the foregoing application scenarios such as the smart grid, industrial control, smart transportation, and the smart city. The function of the terminal may alternatively be performed by a module (for example, a chip or a modem) in the terminal, or may be performed by an apparatus including the function of the terminal.

In embodiments of this application, the network device sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

In embodiments of this application, a time domain symbol may be an orthogonal frequency division multiplexing (orthogonal frequency division multiplexing, OFDM) symbol, or may be a discrete Fourier transform-spread-OFDM (Discrete Fourier Transform-spread-OFDM, DFT-s-OFDM) symbol. Unless otherwise specified, all symbols in embodiments of this application are time domain symbols.

To make the objectives, technical solutions, and advantages of this application clearer, the following further describes this application in detail with reference to accompanying drawings. A specific operation method in a method embodiment may also be applied to an apparatus embodiment or a system embodiment.

The following describes some terms in embodiments of this application, to facilitate understanding of a person skilled in the art.

### (1) Transmit channel (transmitter, TX)

A radio frequency (radio frequency, RF) transmit channel is referred to as a transmit channel for short. One transmit channel corresponds to one physical antenna port. The transmit channel may receive a baseband signal from a baseband chip, perform radio frequency processing (such as up-conversion, amplification, and filtering) on the baseband signal to obtain a radio frequency signal, and finally radiate the radio frequency signal into space through an antenna. Specifically, the transmit channel may include one or more of electronic components such as an antenna switch, an antenna tuner, a power amplifier (power amplifier, PA), a mixer (mixer), a local oscillator (local oscillator, LO), and a filter (filter). These electronic components may be integrated into one or more chips as required. The antenna may also be considered as a part of the transmit channel sometimes. In embodiments of this application, antenna disabling may also be referred to as transmit channel disabling.

### (2) Antenna port (port)

The antenna port may also be referred to as a port for short. Unless otherwise specified, the antenna port in embodiments of this application is a logical antenna port instead of a physical antenna port. One antenna port may be associated with one or more transmit channels. A signal on each antenna port is transmitted through one or more transmit channels associated with the antenna port. When one antenna port is associated with a plurality of transmit channels, a signal on the antenna port is weighted by using a weighting coefficient, and then is transmitted through the plurality of transmit channels associated with the antenna port. It may also be understood that a plurality of physical antennas form one logical antenna after being weighted by using the weighting coefficient. The weighting coefficient herein may be a complex number or a real number, and weighting coefficients on different physical antennas may be the same or different. Each antenna port corresponds to a time-frequency resource and a reference signal. Time-frequency resources corresponding to different antenna ports may be the same or different. A reference signal transmitted by a base station through an antenna port A may be used by a terminal to estimate a feature of a wireless channel from the antenna port A to the terminal. The feature of the wireless channel may be used by the terminal to estimate a physical channel transmitted through the antenna port A, or may be used to determine information such as a modulation order and a bit rate during data transmission. One reference signal may correspond to one or more antenna ports, or it may be understood that one reference signal may be transmitted through one or more antenna ports.

### (3) Reference signal

The reference signal is a known signal provided by a transmitter to a receiver for channel estimation or channel sounding. The reference signal may be used for channel measurement, interference measurement, and the like. For example, a terminal obtains a channel state by measuring parameters such as reference signal received quality (reference signal received quality, RSRQ), a signal-to-noise ratio (signal-to-noise ratio, SNR), a signal-to-interference-plus-noise ratio (signal-to-interference-plus-noise ratio, SINR), a channel quality indicator (channel quality indicator, CQI), and a precoding matrix indicator (precoding matrix indicator, PMI).

### (4) Reference signal resource

The reference signal resource may include at least one of resources of a reference signal, for example, a time-frequency resource, an antenna port, a power resource, and a scrambling code. A network device may send the reference signal based on the reference signal resource, and a terminal may receive the reference signal based on the reference signal resource. In embodiments of this application, one or more antenna ports corresponding to the reference signal resource may also be understood as one or more antenna ports included in the reference signal resource.

Specifically, the reference signal in embodiments of this application may be a channel state information-reference signal (channel state information-reference signal, CSI-RS) or a synchronization signal and physical broadcast channel block (synchronization signal and physical broadcast channel block, SSB). Correspondingly, the reference signal resource may be a CSI-RS resource or an SSB resource.

### (5) CSI

In a process in which a wireless signal arrives at a receiver from a transmitter through a wireless channel, fading may occur due to scattering, reflection, and energy attenuation with a distance. In addition, the wireless signal may be interfered by another signal at the receiver, affecting reception of the wireless signal. The CSI is used to represent a feature of the wireless channel, and may include at least one of a CQI, a PMI, a CSI-RS resource indicator (CSI-RS resource indicator, CRI), a synchronization signal/physical broadcast channel block resource indicator (synchronization signal/physical broadcast channel block resource indicator, SSBRI), a layer indicator (layer indicator, LI), a rank indicator (rank indicator, RI), L1-RSRP, and an L1-SINR. The CSI may be sent by a terminal to a network device through a physical uplink control channel (physical uplink control channel, PUCCH) or a physical uplink shared channel (physical uplink shared channel, PUSCH).

(6) CSI report (CSI report): A terminal feeds back a measured channel state to a network device via a CSI report. One CSI report indicates one piece of CSI fed back by the terminal, to be specific, one CSI report is CSI in one frequency band, one transmission assumption, and one reporting mode. Generally, one CSI report is associated with one reference signal resource used for channel measurement, and may be further associated with one or more reference signal resources used for interference measurement. One CSI report corresponds to one transmission resource, that is, a time-frequency resource used by the terminal to send the CSI. Different CSI reports may be associated with different frequency bands. In this way, the terminal may feed back CSI on the different frequency bands via the different CSI reports. Different CSI reports may alternatively be associated with a same frequency band, but are associated with different transmission assumptions.

For example, both a CSI report 1 and a CSI report 2 are associated with a first frequency band, but the CSI report 1 is associated with two resources used for interference measurement, and the CSI report 2 is associated with five resources used for interference measurement. That the CSI report 1 is associated with the two resources used for interference measurement indicates that CSI in the CSI report 1 corresponds to a subsequent transmission assumption, and two pieces of interference are transmitted in the first frequency band under the assumption. That the CSI report 2 is associated with the five resources used for interference measurement indicates that CSI in the CSI report 2 corresponds to another subsequent transmission assumption, and five pieces of interference are transmitted in the first frequency band under the assumption.

### (7) CSI configuration

A current CSI configuration includes a CSI report configuration (CSI-ReportConfig) and a CSI resource configuration (CSI-ResourceConfig). CSI-ReportConfig is mainly used to configure a parameter related to channel state reporting, for example, a reporting type and a reported measurement indicator. CSI-ResourceConfig is used to configure related information of a reference signal resource, for example, a time-frequency resource, an antenna port, a power resource, or a scrambling code of a reference signal. The following separately describes fields included in CSI-ReportConfig and fields included in CSI-ResourceConfig.

CSI-ReportConfig may include one or more of the following fields:
CSI report configuration identifier (CSI-ReportConfigId), used to identify a CSI report configuration;
resource for channel measurement (resourcesForChannelMeasurement), used to configure a CSI-RS resource for channel measurement, and associated with the resource configuration using CSI-ResourceConfigId, where for example, resourcesForChannelMeasurement may carry an identifier of CSI-ResourceConfig (CSI-ResourceConfigId) used for channel measurement;
resource for interference measurement (CSI-IM-RessourcesForInterference), used to configure a CSI-RS resource for interference measurement, and associated with the resource configuration using CSI-ResourceConfigId;
report configuration type (reportConfigType), used to configure a reporting type of CSI, where the reporting type may be divided into periodic reporting, semi-persistent reporting, aperiodic reporting, and the like; and
report quantity (reportQuantity), indicating a report quantity of CSI, where the report quantity of the CSI may include a reference signal resource identifier, a CRI, an RI, a PMI, a CQI, and the like.

CSI-ResourceConfig may indicate one or more non-zero power (non-zero power, NZP) CSI-RS resource sets, or may indicate one or more CSI-interference measurement (CSI-IM) resource sets, or may indicate one or more SSB resource sets. One NZP-CSI-RS resource set may include one or more NZP-CSI-RS resources, one CSI-IM resource set may include one or more CSI-IM resources, and one SSB resource set may include one or more SSB resources.

Specifically, CSI-ResourceConfig may include one or more of the following fields:
CSI resource configuration identifier (CSI-ResourceConfigId), used to identify a CSI resource configuration;
CSI resource set list (CSI-RS-ResourceSetList), where this field is used to configure a queue of a resource set, the resource set may include a reference signal resource set used for channel measurement, and CSI-RS-ResourceSetList may be associated with a configuration of a NZP-CSI-RS resource set (NZP-CSI-RS-ResourceSet) using NZP-CSI-RS-ResourceSetId;
resource type (resourceType), used to configure a type of a reference signal resource, where the type of the reference signal resource may be divided into a periodic resource, a semi-persistent resource, an aperiodic resource, and the like; and
codebook configuration (codebookConfig), used to configure a multiple-input multiple-output (multi-input multi-output, MIMO) codebook subset and codebook-related information, for example, a codebook type (type1 or type2), including a number N1 of ports in a horizontal direction and a number N2 of ports in a vertical direction, and oversampling numbers O1 and O2 in the two directions, where N1 indicates a number of antenna ports in a first dimension, N2 indicates a number of the antenna ports in a second dimension, the codebook subset is a subset in a codebook set, a terminal can use only a codebook included in the codebook subset and cannot use a codebook outside the codebook subset when the codebook subset is indicated, and the codebook may be replaced with a precoding matrix.

NZP-CSI-RS-ResourceSet includes one or more NZP-CSI-RS-Resources. A configuration of a NZP-CSI-RS-Resource may include one or more of the following:
a power control offset, indicating a power offset of an assumed physical downlink shared channel (physical downlink shared channel, PDSCH) with respect to a CSI-RS resource, where the offset is used to calculate a CQI;
a power control offset relative to a synchronization channel, indicating a power offset of a CSI-RS relative to a secondary synchronization signal; and
a resource mapping configuration of a CSI-RS resource, indicating an OFDM symbol occupied by the CSI-RS in one slot (slot) and a subcarrier occupied by the CSI-RS in one PRB, where the resource mapping configuration may include one or more of the following: indication information indicative of occupation of a frequency domain resource in one PRB (frequencyDomainAllocation), indication information indicative of a number of ports (nrofPorts), indication information indicative of occupation of an OFDM symbol in one slot (firstOFDMSymbolInTimeDomain, or firstOFDMSymbolInTimeDomain and firstOFDMSymbolInTimeDomain2), indication information indicative of a code division multiplexing type (cdm-Type), indication information indicative of a CSI-RS frequency domain density (density), and indication information indicative of an occupied PRB (CSI-FrequencyOccupation).

CSI-ReportConfig may further include a parameter for indicating a time restriction for channel measurement or interference measurement, for example, a field timeRestrictionForChannelMeasurements and a field timeRestrictionForInterferenceMeasurements. timeRestrictionForChannelMeasurements and the timeRestrictionForInterferenceMeasurements are used to configure whether the terminal performs filtering based on a plurality of previously received CSI-RS signals or a plurality of previously received interference signals when performing channel measurement and interference measurement. If the terminal is configured to perform a filtering operation, after learning that a CSI report is reconfigured, when performing filtering, the terminal can perform channel measurement and interference measurement based on only a plurality of CSI-RS signals and a plurality of interference signals that are received after reconfiguration.

It should be understood that CSI-ReportConfig or CSI-ResourceConfig may further include other fields, which are not enumerated herein.

A CSI resource described in this specification may be equivalent to the NZP-CSI-RS resource, and is used for channel measurement.

A network device may configure or reconfigure the CSI report configuration (CSI-ReportConfig) and the CSI-RS resource configuration (CSI-ResourceConfig) for the terminal via RRC signaling. The network device may indicate the CSI report configuration via an RRC information element CSI-ReportConfig included in the RRC signaling. An association relationship between CSI measurement and a CSI report is changed via RRC signaling.

### (8) CSI processing unit (CSI processing unit, CPU)

When a terminal performs CSI measurement, a specific storage resource needs to be occupied. In the 3GPP protocol, a number of CPUs is used to represent a resource that needs to be occupied by the terminal to process CSI. The terminal reports, to a network device, a number of CPUs that can be supported by the terminal. For example, a terminal 1 notifies a base station that a maximum number of CPUs supported by the terminal 1 is 10, and a terminal 2 notifies the base station that a maximum number of CPUs supported by the terminal 2 is 15. The maximum number of CPUs supported herein is a number of CPUs simultaneously supported, and may be a number of CPUs simultaneously supported by one carrier, or a number of CPUs simultaneously supported by all carriers. For example, if the terminal supports only one CPU, it indicates that the terminal has only one CPU to process the CSI at a same moment.

Currently, antenna disabling may be performed on the network device to reduce power consumption of the network device. Antenna disabling may include two types. In a first type, antenna disabling affects an antenna port, to be specific, when antenna disabling occurs, a number of antenna ports of a CSI-RS changes. In a second type, antenna disabling does not affect an antenna port, to be specific, when antenna disabling occurs, an antenna port of a CSI-RS does not change. When antenna disabling is performed, for first-type antenna disabling and second-type antenna disabling, the network device may notify, via RRC signaling, the terminal of configuration update, to ensure that channel measurement is normally performed.

Antenna disabling may last from dozens of milliseconds to more than 100 milliseconds. In this case, a CSI report configuration and a resource configuration associated with the CSI report configuration need to be frequently updated, resulting in a long RRC reconfiguration delay. In an antenna disabling scenario, for first-type antenna disabling, only a part of parameters in the CSI report configuration and the resource configuration associated with the CSI report configuration change, for example, a codebook configuration and a CSI-RS resource port number configuration change. For second-type antenna disabling, neither a parameter in the CSI report configuration nor a parameter in the resource configuration associated with the CSI report configuration may change. Therefore, reconfiguring all parameters in the CSI report configuration and the resource configuration associated with the CSI report configuration via RRC reconfiguration signaling causes a long delay.

To reduce reconfiguration overheads of the channel state information report configuration, embodiments of this application provide several possible communication methods. The communication method is performed by a network apparatus and a terminal apparatus as an example for description. The network apparatus in embodiments of this application may be a network device, or a chip, a unit, or a module in the network device. For example, the network apparatus may be the access network device 110a or the access network device 110b in FIG. 1. Alternatively, the network apparatus may be a communication apparatus having a function of the network device, or a chip, a unit, or a module inside the communication apparatus having the function of the network device. The terminal apparatus in embodiments of this application may be a terminal, or a chip, a unit, or a module in the terminal, for example, may be any terminal 120 shown in FIG. 1. Alternatively, the terminal apparatus may be a communication apparatus having a function of the terminal, or a chip, a unit, or a module inside the communication apparatus having the function of the terminal. For ease of understanding, in embodiments of this application, an example in which the terminal apparatus is a terminal device or a chip, a unit, or a module inside the terminal device, and the network apparatus is a network device or a chip, a unit, or a module inside the network device is used for description.

To make the objectives, technical solutions, and advantages of this application clearer, the following further describes this application in detail with reference to accompanying drawings. A specific operation method in a method embodiment may also be applied to an apparatus embodiment or a system embodiment.

In embodiments of this application, if there is no logical conflict, the terms "report configuration", "CSI report configuration", "channel state information report configuration", and "CSI-ReportConfig" are interchangeable, the terms "channel state information" and "CSI" are interchangeable, and the terms "report", "feed back", and "send" are interchangeable.

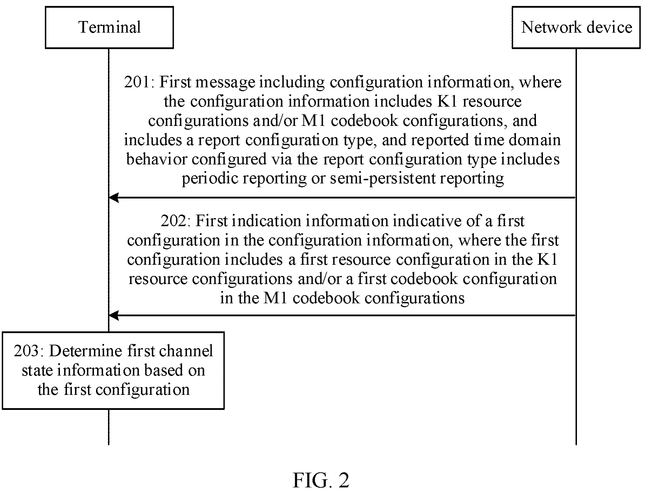

Based on the architecture of the network system shown in FIG. 1 and the content described in the foregoing related technologies, FIG. 2 is an example of a possible schematic flowchart of a communication method according to an embodiment of this application. The method is applicable to a case in which time domain behavior of a report configuration is periodic or semi-persistent. The method is applicable to a first-type antenna disabling scenario, and is also applicable to a second-type antenna disabling scenario. A solution in FIG. 2 is described by using an example in which a network apparatus and a terminal apparatus interact with each other for execution. A procedure shown in FIG. 1 is described by using an example in which the network apparatus is a network device and the terminal apparatus is a terminal. For related descriptions of the network apparatus and the terminal apparatus, refer to the foregoing content. Details are not described again.

As shown in FIG. 2, the method includes the following steps.

Step 201: The network device sends a first message to the terminal. Correspondingly, the terminal device receives the first message.

The first message in this embodiment of this application includes configuration information. In a possible implementation, the configuration information includes a report configuration type, the report configuration type is used to configure reported time domain behavior including periodic reporting or semi-persistent reporting.

Specifically, the configuration information includes K1 resource configurations and/or M1 codebook configurations, where K1 is an integer greater than 1, and M1 is an integer greater than 1.

Optionally, codebook configurations in the M1 codebook configurations are different from each other. For example, any two codebook configurations have different one or more of the following parameters: a number N1 of ports, a number N2 of ports, and a codebook subset. Optionally, the K1 resource configurations may correspond to reporting of first channel state information. For example, the K1 resource configurations include a first resource configuration and a second resource configuration, and the first resource configuration and the second resource configuration are respectively candidate configurations for reporting the first channel state information, or the first resource configuration and the second resource configuration are respectively candidate configurations of a first channel state information report configuration. Optionally, the first resource configuration may be applied to channel state information measurement based on the first channel state information report configuration in an antenna disabling scenario, and the second resource configuration may be applied to channel state information measurement in a scenario in which antenna disabling is canceled or an antenna is not disabled.

Optionally, the M1 codebook configurations may correspond to reporting of the first channel state information. For example, the M1 codebook configurations include a first codebook configuration and a second codebook configuration, and the first codebook configuration and the second codebook configuration are respectively candidate codebook configurations for reporting the first channel state information, or the first codebook configuration and the second codebook configuration are respectively candidate codebook configurations of the first channel state information report configuration. Optionally, the first codebook configuration may be applied to channel state information measurement in the antenna disabling scenario, and the second codebook configuration may be applied to channel state information measurement in the scenario in which antenna disabling is canceled or the antenna is not disabled.

Optionally, the first message is the first channel state information report configuration. Alternatively, the configuration information is associated with the first channel state information report configuration.

Optionally, the first resource configuration specifically has the following several implementations:

Optional implementation 1: The first resource configuration may indicate a first non-zero power channel state information-reference signal resource set, where the non-zero power channel state information-reference signal resource set includes one or more channel state information reference resources. For example, the first resource configuration may be used to configure one or more channel state information-reference signals included in the first non-zero power channel state information-reference signal resource set. For example, the first resource configuration is NZP-CSI-RS-ResourceSet shown in TS 38.331.

Optional implementation 2: The first resource configuration may indicate a first channel measurement resource group (channel measurement resource group, CMR group), where the first channel measurement resource group is included in a non-zero power channel state information-reference signal resource set. The non-zero power channel state information-reference signal resource set may include one or more channel resource groups, and the first channel measurement resource group includes one or more channel state information-reference signal resources. The CMR group is configured, so that a plurality of channel state information-reference signal resources included in the non-zero power channel state information-reference signal resource set may be grouped.

Optional implementation 3: The first resource configuration may include a resource configuration based on a resource granularity. Specifically, the first resource configuration may include one or more pieces of first configuration information, and the one or more pieces of first configuration information are respectively configuration information of one or more first channel state information-reference signal resources, and the one or more first channel state information-reference signal resources are included in one non-zero power channel state information-reference signal resource set. In a possible implementation, the first configuration information includes one or more of the following: information indicative of a number of ports (for example, nrofPorts), indication information indicative of a subcarrier occupied by a channel state information-reference signal resource in one PRB, indication information indicative of a symbol occupied by a channel state information-reference signal resource in one slot, indication information indicative of a channel state information-reference signal power control offset (for example, powercontroloffset), and indication information indicative of a synchronization signal power control offset. Optionally, the information indicative of the number of ports may be indication information indicative of a number of channel state information-reference signal resource ports, or indication information indicative of an activated port in the channel state information-reference signal resource ports, or indication information indicative of a deactivated channel state information-reference signal resource port in the channel state information-reference signal resource ports. In another possible implementation, the first configuration information may be indication information indicative of a reference signal resource mapping configuration.

Optional implementation 4: The first resource configuration may include a resource configuration based on a resource granularity. Specifically, the first resource configuration may include one piece of second configuration information, and the second configuration information is configuration information of one or more first channel state information-reference signal resources (which may be understood as configuration information shared by the one or more first channel state information-reference signals), and the one or more first channel state information-reference signal resources are included in one non-zero power channel state information-reference signal resource set. In a possible implementation, the second configuration information includes one or more of the following: information indicative of a number of ports (for example, nrofPorts), indication information indicative of a channel state information-reference signal power control offset (for example, powercontroloffset), and indication information indicative of a synchronization signal power control offset. Optionally, the information indicative of the number of ports may be indication information indicative of a number of channel state information-reference signal resource ports, or indication information indicative of an activated port in the channel state information-reference signal resource ports, or indication information indicative of a deactivated channel state information-reference signal resource port in the channel state information-reference signal resource ports.

Optional implementation 5: The first resource configuration may indicate a reference signal resource used for channel measurement, and the first resource configuration is associated with one or more non-zero power channel state information-reference signal resource sets, and a channel state information-reference signal included in the one or more non-zero power channel state information-reference signal resource sets is the reference signal resource used for channel measurement. For example, the first resource configuration may be CSIResourceconfig in TS 38.331.

It may be understood that for any one of the K1 resource configurations, also refer to the foregoing implementation of the first resource configuration.

Optionally, a first configuration specifically has the following several optional implementations:

Optional implementation 1: The first configuration includes the first resource configuration and the first codebook configuration, where the first resource configuration specifically indicates the non-zero power channel state information-reference signal resource set, the CMR group, or the reference signal resource used for channel measurement. An implementation of the first configuration may be applied to a scenario in which a part of channel state information-reference signal resource ports are disabled in the antenna disabling scenario. In this scenario, because the part of channel state information-reference signal resource ports are disabled, a codebook configuration also changes. Therefore, the codebook configuration may be reconfigured via first indication information.

Optional implementation 2: The first configuration includes the first resource configuration and the first codebook configuration, where the first resource configuration is specifically configuration information of a first channel state information-reference signal resource (as described above, details are not described again). Optionally, the indication information of the channel state information-reference signal resource mapping configuration indicates channel state information-reference signal resource mapping configurations of all channel state information-reference signal resources included in a non-zero power channel state information-reference signal resource set. In other words, all the channel state information-reference signal resources included in the non-zero power channel state information-reference signal resource set use the channel state information-reference signal resource mapping configuration indicated by the first configuration. It should be understood that, implementation of the first configuration is based on the foregoing implementation of the first configuration, the configuration information included in the first configuration is further reduced, so that signaling overheads can be reduced. The implementation of the first configuration may be applied to a scenario in which a part of channel state information-reference signal resource ports are disabled in the antenna disabling scenario. In this scenario, because the part of channel state information-reference signal resource ports are disabled, a codebook configuration also changes. Therefore, the codebook configuration may be reconfigured via first indication information.

Optional implementation 3: The first configuration includes the first resource configuration and the first codebook configuration, where the first resource configuration is specifically a number of channel state information-reference signal resource ports for all channel state information-reference signal resources included in a non-zero power channel state information-reference signal resource set. Optionally, the first resource configuration may further include one or more of the following: indication information indicative of a subcarrier occupied by a channel state information-reference signal resource in one PRB (for example, frequencyDomainAllocation), indication information indicative of an OFDM symbol occupied by a channel state information-reference signal resource in one slot (for example, firstOFDMSymbolInTimeDomain, or firstOFDMSymbolInTimeDomain and firstOFDMSymbolInTimeDomain2), indication information indicative of a code division multiplexing type (for example, cdm-Type), indication information indicative of a channel state information-reference signal power control offset, and indication information indicative of a synchronization signal power control offset. The M1 codebook configurations include the first codebook configuration, and the first codebook configuration is specifically indication information of a codebook configuration. Optionally, the first resource configuration indicates configuration information of all channel state information-reference signal resources included in a non-zero power channel state information-reference signal resource set. In other words, all the channel state information-reference signal resources included in the non-zero power channel state information-reference signal resource set use the configuration information indicated by the first resource configuration. It should be understood that, implementation of the first configuration is based on the foregoing implementation of the first configuration, the configuration information included in the first configuration is further reduced, so that signaling overheads can be reduced. It should be understood that the implementation of the first configuration may be applied to a scenario in which a part of channel state information-reference signal resource ports are disabled in the antenna disabling scenario. In this scenario, because the part of channel state information-reference signal resource ports are disabled, a codebook configuration also changes. Therefore, the codebook configuration may be reconfigured via first indication information.

Optional implementation 4: The first configuration includes the first resource configuration, where the first resource configuration is specifically a non-zero power channel state information-reference signal resource set or a CMR group, and the first codebook configuration is specifically indication information of a codebook configuration. It should be understood that the implementation of the first configuration may be applied to a scenario in which a channel state information-reference signal resource port does not change in the antenna disabling scenario. Because the channel state information-reference signal resource port does not change, a codebook configuration does not change. Therefore, the codebook configuration may not need to be reconfigured via first indication information.

In this embodiment of this application, optionally, the configuration information in the first message may further include other information such as a parameter indicating a time restriction for channel measurement or interference measurement, for example, timeRestrictionForChannelMeasurements and timeRestrictionForInterferenceMeasurements.

In a possible implementation, the first message sent by the network device to the terminal may be an RRC message, and the RRC message is used to configure one or more channel state information report configurations.

Step 202: The network device sends the first indication information to the terminal. Correspondingly, the terminal receives the first indication information.

In this embodiment of this application, the first indication information indicates the first configuration in the configuration information. The first configuration includes the first resource configuration in the K1 resource configurations, or the first configuration includes the first codebook configuration in the M1 codebook configurations, or the first configuration includes the first resource configuration in the K1 resource configurations and the first codebook configuration in the M1 codebook configurations.

A part of configurations in the configuration information may be notified to the terminal via the first indication information. Compared with reconfiguring a channel state information report configuration and all configuration information corresponding to a channel state information resource configuration associated with the channel state information report configuration via an RRC message, signaling overheads can be reduced according to this embodiment of this application.

In a possible implementation, when the channel state information report configuration needs to be reconfigured, the network device may send the first indication information to the terminal device, and notify, via the first indication information, the terminal of a resource configuration and/or a codebook configuration during antenna disabling. In this way, the terminal switches configurations related to channel state information measurement and reporting.

In a possible implementation, before performing antenna disabling, the network device may send the first indication information to the terminal device, and notify, via the first indication information, the terminal of the resource configuration and/or the codebook configuration during antenna disabling. In this way, the terminal switches the configurations related to channel state information measurement and reporting. Optionally, in the scenario in which antenna disabling is canceled or the antenna is not disabled, the network device may also send indication information to the terminal device. Herein, for ease of differentiation, the indication information is referred to as second indication information. The second indication information indicates a second configuration in the configuration information, and the second configuration includes the second resource configuration in the K1 resource configurations and/or the second codebook configuration in the M1 codebook configurations. Therefore, the terminal is notified, via the second indication information, of a resource configuration and/or a codebook configuration after antenna disabling is canceled or when the antenna is not disabled. In this way, the terminal switches configurations related to channel state information measurement and reporting.

It may be understood that, in this embodiment of this application, reconfiguration related to channel state information measurement and reporting can be performed on the terminal in a scenario in which the network device disables an antenna and/or does not disable an antenna port, and the method provided in this embodiment of this application can be further used in any scenario in which channel state information report configuration needs to be reconfigured.

In a possible implementation, the first indication information is downlink control information (downlink control information, DCI) or a MAC control element (control element, CE). Compared with reconfiguring a channel state information report configuration via an RRC message, reconfiguring configuration information related to channel state information measurement and reporting via the DCI or the MAC CE in this embodiment of this application can reduce a reconfiguration delay and implement reconfiguration of the channel state information report configuration more flexibly and more quickly.

In a possible implementation, the first indication information is cell-level indication information, and all terminals in a corresponding cell may receive the first indication information. Alternatively, the first indication information may be user group-level indication information, and all terminals in a corresponding user group may receive the first indication information. Compared with reconfiguration of user-level (per UE) channel state information report configuration implemented via an RRC message, in this embodiment of this application, signaling overheads of reconfiguring the channel state information report configuration can be reduced.

In a possible manner, a third configuration may be sent to the terminal via the first message.

For example, the configuration information in the first message further includes K2 resource configurations and/or M2 codebook configurations, and the K2 resource configurations and the M2 codebook configurations are associated with (or included in) a second channel state information report configuration. The third configuration includes a third resource configuration in the K2 resource configurations and/or a third codebook configuration in the M1 codebook configurations.

In a possible implementation, the network device and/or the terminal may store a configuration table. Configuration information associated with (or included in) one or more report configurations may be stored via the configuration table in a form of the configuration table. The configuration table includes one or more configuration entries, and the one or more configuration entries include one first configuration entry. The first configuration entry corresponds to L (L is a positive integer) channel state information report configurations, the L channel state information report configurations include the first channel state information report configuration, and the first channel state information report configuration corresponds to the first configuration (the first configuration includes the first resource configuration and/or the first codebook configuration). In other words, the first configuration entry includes a correspondence between the first channel state information report configuration in the L (L is a positive integer) channel state information report configurations and the first configuration (the first configuration includes the first resource configuration and/or the first codebook configuration). For related descriptions of the first configuration, the first resource configuration, and the first codebook configuration, refer to the foregoing descriptions.

It may be understood that, in the L channel state information report configurations corresponding to the first configuration table, a channel state information report other than the first channel state information report configuration also has a similar correspondence. For example, the L channel state information report configurations further include the second channel state information report configuration, and the second channel state information report configuration corresponds to the third configuration (the third configuration includes the third resource configuration and/or the third codebook configuration).

It may be understood that numbers of channel state information report configurations included in the configuration entries may be the same or may be different. This is not limited in embodiments of this application.

For example, the configuration table includes the first configuration entry and a second configuration entry, and each configuration entry includes L=2 channel state information report configurations. Table 1 is a diagram of a configuration table provided in this embodiment of this application.

**Table 1: Configuration table (L=2)**

| Configuration entry | Channel state information report configuration | Configuration |
|---|---|---|
| First configuration entry | (Index of the) first channel state information report configuration | (Index of the) first configuration: Including the first resource configuration and/or the first codebook configuration |
| | (Index of the) second channel state information report configuration | (Index of the) third configuration: Including the third resource configuration and/or the third codebook configuration |
| Second configuration entry | (Index of the) first channel state information report configuration | (Index of the) second configuration: Including the second resource configuration and/or the second codebook configuration |
| | (Index of the) second channel state information report configuration | (Index of the) fourth configuration: Including a fourth resource configuration and/or a fourth codebook configuration |

Table 1 includes the first configuration entry and the second configuration entry. The first configuration entry is used as an example, and includes the index of the first channel state information report configuration and the index of the second channel state information report configuration. The configuration field corresponding to the first channel state information report configuration includes the index of the first configuration, and the correspondence between the first channel state information report configuration and the first configuration may be indicated via the data structure. Optionally, the configuration field corresponding to the first channel state information report configuration may alternatively include the first resource configuration and/or the first codebook configuration that correspond/corresponds to the first configuration.

Optionally, the first configuration corresponding to the first channel state information report configuration in the first configuration entry may include the first resource configuration and the first codebook configuration, and the second configuration corresponding to the first channel state information report configuration in the second configuration entry may include only the second resource configuration. The foregoing is merely a possible example. It may be understood that there may be another example. For example, the first configuration includes the first resource configuration, and the second configuration includes the second resource configuration and the second codebook configuration. That is, configurations corresponding to a same channel state information report configuration in different configuration entries may include different content.

Optionally, the configuration table may be pre-configured in the terminal and/or the network device.

Optionally, the configuration table may be sent by the network device to the terminal. In a possible implementation, the network device sends first information to the terminal, where the first information indicates the configuration table. Optionally, an implementation in which the first information indicates the configuration table may be as follows: The first information includes the configuration table. Another implementation is follows: The first information includes indication information of the configuration table (for example, an index of the configuration table). After subsequently receiving the first indication information based on the indication information of the configuration table, the terminal obtains, based on the configuration table, related configuration information of a corresponding channel state information report configuration. Optionally, the first information may be sent via the first message in this embodiment of this application. This implementation is applicable to a case in which the terminal stores a plurality of configuration tables. The plurality of configuration tables may be preset, or may be configured by the network device for the terminal.

In this embodiment of this application, the first indication information sent by the network device may indicate the first configuration entry in the configuration table. For example, the first indication information may include an index of the first configuration entry. Correspondingly, after receiving the first indication information, the terminal may obtain, based on the first configuration entry indicated by the first indication information and the configuration table, the first configuration corresponding to the first channel state information report configuration in the first configuration entry. Further, the terminal may determine the first channel state information based on the first configuration. Optionally, the first configuration entry further includes the second channel state information report configuration, and the second channel state information report configuration corresponds to the third configuration. Therefore, the terminal may further obtain the third configuration based on the first indication information, and may determine second channel state information based on the third configuration. In the foregoing implementation, the L channel state information report configurations may be reconfigured for the terminal via the first indication information. This can reduce reconfiguration overheads of the channel state information report configurations.

In a possible implementation, the first indication information may further indicate a part of configuration information of one radio link monitoring (radio link monitoring, RLM) configuration (referred to as a first radio link monitoring configuration herein for ease of description), and/or indicate a part of configuration information of one mobility management configuration (referred to as a first mobility management configuration herein for ease of description). Specifically, the first radio link monitoring configuration (RadioLinkMonitoringConfig) may correspond to a plurality of fifth configurations, each fifth configuration includes one list of reference signal resources used for RLM, and the first indication information may indicate one of the plurality of fifth configurations corresponding to the first radio link monitoring configuration. The first mobility management configuration (CSI-RS-ResourceConfigMobility) may correspond to a plurality of sixth configurations, each sixth configuration includes one list of channel state information-reference signal resources used for mobility management, and the first indication information may indicate one of the plurality of sixth configurations for the first mobility management configuration.

For example, the configuration table includes the first configuration entry and a second configuration entry, and each configuration entry includes L=2 channel state information report configurations. Table 2 shows another possible configuration table in this embodiment of this application. The second configuration entry may further indicate the first radio link monitoring configuration, for example, include an index of the first radio link monitoring configuration.

**Table 2: Configuration table (L=2)**

| Configuration entry | Channel state information report configuration | Configuration |
|---|---|---|
| First configuration entry | (Index of the) first channel state information report configuration | (Index of the) first configuration: Including the first resource configuration and the first codebook configuration |
| | (Index of the) second channel state information report configuration | (Index of the) third configuration: Including the third resource configuration and the third codebook configuration |
| | (Index of the) first radio link monitoring configuration | Fifth configuration #1 |
| Second configuration entry | (Index of the) first channel state information report configuration | (Index of the) second configuration: Including the second resource configuration and the second codebook configuration |
| | (Index of the) second channel state information report configuration | Fourth configuration: Including a fourth resource configuration and a fourth codebook configuration |
| | (Index of the) first radio link monitoring configuration | Fifth configuration #2 |

Based on Table 2, indication information sent by the network device to the terminal may indicate the first configuration entry or the second configuration entry. For example, the indication information indicates the first configuration entry. After receiving the indication information, the terminal may obtain, based on the first configuration entry indicated by the indication information and Table 2, the first configuration corresponding to the first channel state information report, the fourth configuration corresponding to the second channel state information report, and the fifth configuration #1 corresponding to the first radio link monitoring configuration, and the terminal may measure and report channel state information based on the second configuration, the fourth configuration, and the fifth configuration #1.

Step 203: The terminal determines the first channel state information based on the first configuration.

Further, the terminal may send the first channel state information to the network device based on the first configuration. Correspondingly, the network device may receive the first channel state information sent by the terminal.

In this embodiment of this application, there may be the following two switching delay-based solutions, which are separately described below.
(1) In a first switching delay-based solution, a switching delay starts to be calculated after the first indication information is received.

In a possible implementation, the terminal receives the first indication information at a moment T0, and the terminal may determine third channel state information based on the second configuration in S1 (S1 is an integer greater than or equal to 0) time units after the moment T0. The second configuration includes the second resource configuration in the K1 resource configurations, or the second configuration includes the second codebook configuration in the M1 codebook configurations, or the second configuration includes the second resource configuration in the K1 resource configurations and the second codebook configuration in the M1 codebook configurations. The time unit may be a slot or a time unit of another granularity. This is not limited in embodiments of this application. It may also be understood that the terminal receives the first indication information at the moment T0, and the second configuration is invalid after T0+S1 (S1 is an integer greater than or equal to 0) time units. In other words, the terminal still measures the channel state information (and reports the channel state information) based on the second configuration in the S1 time units after the moment T0 at which the first indication information is received, and the terminal no longer measures the channel state information (and reports the channel state information) based on the second configuration after the S1 time units after the moment T0 at which the first indication information is received. Optionally, the third channel state information corresponds to reporting of the first channel state information, or the third channel state information is included in a reporting instance (reporting instance) reported via the first channel state information.

Further, when the reported time domain behavior configured by using the report configuration type in the configuration information is periodic or semi-persistent reporting, before receiving the first indication information, the terminal device may determine the channel state information based on the second configuration. In other words, before receiving the first indication information, the terminal determines the channel state information based on the second configuration. After receiving the first indication information, the terminal still determines the channel state information based on the second configuration in the S1 time units after the first indication information is received.

In a possible implementation, the second configuration is indicated by the second indication information, and a receiving time of the second indication information is earlier than that of the first indication information. Based on this implementation, before sending the first indication information to the terminal device, the network device sends the second indication information to the terminal device, and indicates the second configuration via the second indication information. Then, the network device sends the first indication information to the terminal device, and indicates the first configuration via the first indication information, to implement configuration switching. The terminal measures the channel state information (and reports the channel state information) based on the second configuration indicated by the second indication information before receiving the first indication information and in the S1 time units after the first indication information is received. Optionally, for a scenario in which switching occurs when an antenna is disabled, the second configuration indicated by the second indication information is used for a configuration related to channel state information measurement and reporting in the scenario in which antenna disabling is canceled or the antenna is not disabled, and the first configuration indicated by the first indication information is used for a configuration related to channel state information measurement and reporting in the scenario in which the antenna is disabled. Alternatively, the second configuration indicated by the second indication information is used for the configuration related to channel state information measurement and reporting in the antenna disabling scenario, and the first configuration indicated by the first indication information is used for the configuration related to channel state information measurement and reporting in the scenario in which antenna disabling is canceled or the antenna is not disabled.

In another possible implementation, the second resource configuration is a default resource configuration in the K1 resource configurations, and the second codebook configuration is a default codebook configuration in the M1 codebook configurations. Optionally, in the scenario in which switching occurs when the antenna is disabled, the default resource configuration and the default codebook configuration may be configurations related to channel state information measurement and reporting in the scenario in which antenna disabling is canceled or the antenna is not disabled, and the first configuration indicated by the first indication information is used for the configuration related to channel state information measurement and reporting in the antenna disabling scenario. Optionally, the default resource configuration may be one of resource configurations included in the first channel state information report configuration. Further, the default resource configuration may be a 1st resource configuration in the resource configurations included in the first channel state information report configuration. Optionally, the default codebook configuration may be one of codebook configurations included in the first channel state information report configuration. Further, the default codebook configuration may be a 1st codebook configuration in the codebook configurations included in the first channel state information report configuration. Based on this implementation, before the network device sends the first indication information to the terminal device, the terminal device uses the second configuration. Then, the network device sends the first indication information to the terminal device, and indicates the first configuration via the first indication information, to implement configuration switching. The terminal measures the channel state information (and reports the channel state information) based on the second configuration before receiving the first indication information and in the S1 time units after the first indication information is received.

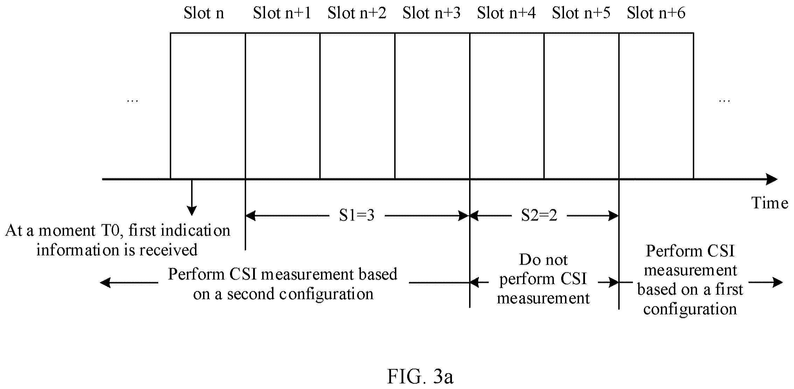

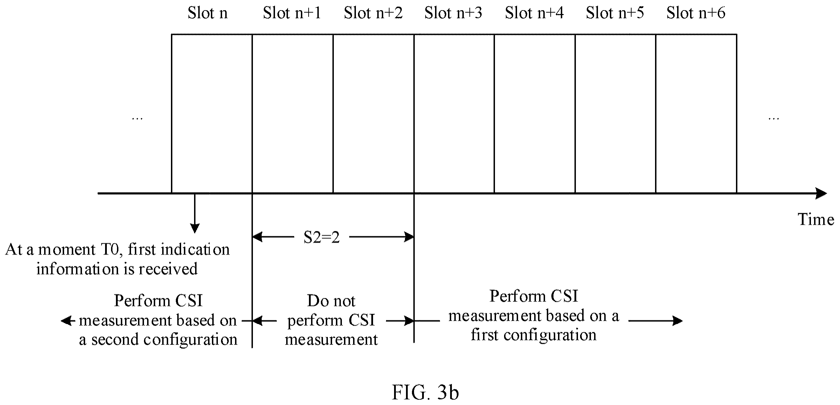

In a possible implementation, the terminal may determine the channel state information based on the first configuration indicated by the first indication information after the S1+S2 time units after the moment T0, where S1 is an integer greater than or equal to 0. Optionally, the terminal does not measure the channel state information in the S2 time units after the moment T0+S1. Optionally, the terminal does not send the channel state information in the S2 time units after the moment T0+S1. It may be understood that the S2 time units are a switching delay, and the terminal performs a related configuration or switching operation (for example, configuring or switching a radio frequency channel) based on a configuration change in the time period, to ensure that channel state information is subsequently measured based on a new configuration (for example, the first configuration in this embodiment). With reference to the foregoing embodiment, when the reported time domain behavior is periodic reporting, a possible example may be shown in FIG. 3a. S1=3 slots, S2=2 slots, and the terminal receives the first indication information at a moment T0 in a slot n, in this case. In this case, the terminal determines the channel state information based on the second configuration before the moment T0 and from the moment T0 to the end of a slot n+3, does not measure the channel state information in a slot n+4 and a slot n+5, and measures the channel state information based on the first configuration indicated by the first indication information starting from a slot n+6. For another example, when the reported time domain behavior is periodic reporting, another possible example may be shown in FIG. 3b. S1=0, S2=2 slots, and the terminal receives the first indication information at a moment T0 in a slot n. In this case, the terminal determines the channel state information based on the second configuration before the moment T0 and from the moment T0 to the end of the slot n, does not measure the channel state information in a slot n+1 and a slot n+2, and measures the channel state information based on the first configuration indicated by the first indication information starting from a slot n+3. In other words, the first configuration indicated by the first indication information takes effect only after the S1+S2 time units after the terminal receives the first indication information. In the foregoing implementation, the channel state information may not be measured and reported in the switching delay, so that the terminal can have plenty of time to perform the related configuration and switching operation, to ensure that the channel state information can be measured and reported based on a new configuration after a report configuration is reconfigured.

S2 has the following several implementations:
Optional implementation 1: S2 is a positive integer.

Optional implementation 2: When the first configuration is completely the same as the second configuration, S2 may be equal to 0. When the first configuration is not completely the same as the second configuration, S2 may be greater than 0. In this real-time manner, the terminal may autonomously determine whether there is the switching delay. For example, if the first configuration is completely the same as the second configuration, the terminal may determine that S2 is equal to 0. This implementation may be applied to the second-type antenna disabling scenario. In this scenario, because configuration parameters before and after reconfiguration are the same, configuration switching without a switching delay can be implemented. The terminal may determine, based on whether the first configuration is the same as the second configuration, whether there is the switching delay.

Optional implementation 3: When the first codebook configuration included in the first configuration is completely the same as the second codebook configuration included in the second configuration, S2 may be equal to 0. When the first codebook configuration included in the first configuration is not completely the same as the second codebook configuration included in the second configuration, codebook switching may cause a specific switching delay. Therefore, S2 may be greater than 0.

(2) In a second switching delay-based solution, a switching delay starts to be calculated from a moment at which the terminal finishes feeding back an ACK after receiving the first indication information.

In another possible implementation, the terminal receives the first indication information at a moment T0, and sends the ACK of the first indication information at a moment T1. The terminal may determine third channel state information based on the second configuration in S1 (S1 is an integer greater than or equal to 0) time units after the moment T1. The second configuration includes the second resource configuration in the K1 resource configurations, or the second configuration includes the second codebook configuration in the M1 codebook configurations, or the second configuration includes the second resource configuration in the K1 resource configurations and the first codebook configuration in the M1 codebook configurations. The time unit may be a slot or a time unit of another granularity. This is not limited in embodiments of this application. It may also be understood that the terminal receives the first indication information at the moment T0, and sends the ACK of the first indication information at the moment T1, and the second configuration is invalid after the T1+S1 (S1 is an integer greater than or equal to 0) time units. In other words, the terminal measures the channel state information based on the second configuration in the S1 time units after the moment T1 at which the first indication information is received.

In a possible implementation, the terminal receives the first indication information at the moment T0, and sends the ACK of the first indication information at the moment T1. The terminal may determine the channel state information based on the first configuration indicated by the first indication information after S1+S2 time units after the moment T1, where S1 is an integer greater than or equal to 0. Optionally, the terminal does not measure the channel state information in the S2 time units after the moment T1+S1. Optionally, the terminal does not send the channel state information in the S time units after the moment T1+S1. It may be understood that the S2 time units are a switching delay, and the terminal performs a related configuration or switching operation (for example, configuring or switching a radio frequency channel) based on a configuration change in the time period, to ensure that channel state information is subsequently measured based on a new configuration (for example, the first configuration in this embodiment). For an implementation of S2, refer to the first-type switching delay-based solution. Details are not described herein again.

In this embodiment of this application, a possible implementation in which the terminal determines the first channel state information based on the first configuration is as follows: The terminal may determine the channel state information based on a first reference signal, a second reference signal, and the first configuration. The first reference signal is a reference signal received in S3 (S3 is a positive integer) time units before the first indication information, the second reference signal is a reference signal received after the first indication information, and both the first reference signal and the second reference signal are reference signals received based on the first configuration.

Based on the foregoing implementation, in a possible scenario, the terminal may determine the channel state information based on the first reference signal, the second reference signal, and the first configuration. The first reference signal is the reference signal received in the S3 (S3 is a positive integer) time units before the first indication information, the second reference signal is the reference signal received after the first indication information, and both the first reference signal and the second reference signal are the reference signals received based on the first configuration. The S3 time units are included in a first time window, and an end moment of the first time window is a first time unit. Optionally, the first time unit may be a time unit that includes a channel state information reference resource. For a definition of the channel state information reference resource, refer to descriptions in TS 38.214. Optionally, the first time unit may be a last time unit that includes the second reference signal and that is before the channel state information reference resource. For the definition of the channel state information reference resource, refer to the descriptions in TS 38.214. Optionally, the first time unit may be a time unit in which the first indication information is received. Optionally, the first time unit is a time unit in which the terminal sends the ACK of the first indication information. It should be understood that the first time unit may be in another format. This is not limited herein in this application.

Based on the foregoing implementation, another possible scenario is as follows: After receiving the first indication information, the terminal obtains a reference signal received in a first time period before a first moment. It is assumed that H (H is a positive integer) reference signals are received in the first time period. After receiving the first indication information, the terminal receives the second reference signal based on the first configuration. The terminal may determine the channel state information based on the first configuration. Specifically, the terminal may select R (R is a positive integer) first reference signals from the H reference signals, where resource configurations of the R first reference signals are the same as that of the second reference signal. The R first reference signals are included in the S3 time units before the first indication information is received, and the S3 time units are included in the first time period. The terminal determines the channel state information based on the R first reference signals, the second reference signal, and the first configuration.

Optionally, the terminal may send capability information to the network device, to indicate whether the terminal has a capability of measuring the channel state information based on the first reference signal received before the first indication information is received (for example, the R first reference signals that are in the H first reference signals and that are received before the first indication information). Further, the capability information may include a length of the first time window, or a parameter for determining the length of the first time window.

In this embodiment of this application, another possible implementation in which the terminal determines the first channel state information based on the first configuration is as follows: The terminal may determine the channel state information based on the second reference signal and the first configuration. The second reference signal is a reference signal received after the first indication information, and the second reference signal is a reference signal received based on the first configuration. In other words, after receiving the first indication information, the terminal measures the channel state information based on only the channel state information-reference signal received after the first indication information is received.

In this embodiment of this application, a specific implementation in which the terminal determines the first channel state information based on the first configuration is applicable to a scenario in which the terminal is configured to perform a filtering operation. In a possible implementation, the configuration information in the first message further includes a parameter indicating a time restriction for channel measurement or interference measurement (for example, timeRestrictionForChannelMeasurements and timeRestrictionForInterferenceMeasurements), and the terminal may be configured to perform the filtering operation by using the parameter.

In a possible implementation, after the terminal receives the first indication information, a number of CPUs occupied when the terminal determines the channel state information based on the first configuration indicated by the first indication information may be determined based on the first configuration. In another possible implementation, before the terminal receives the first indication information, a number of CPUs occupied when the terminal determines the channel state information based on the second configuration may be determined based on the second configuration. Specifically, for an operation that the terminal determines, based on the first configuration or the second configuration, the number of occupied CPUs, refer to descriptions in TS 38.214. For example, when the terminal is configured to report channel state information including one or more of a PMI, an RI, a CQI, an LI, and i1, after receiving the first indication information, the terminal determines a first number of occupied CPUs based on the first resource configuration included in the first configuration. The first resource configuration may be a non-zero power channel state information-reference signal set, the channel state information-reference signal set includes A non-zero power channel state information-reference signals, and the first number of occupied CPUs may be A. Before receiving the first indication information, the terminal determines a second number of occupied CPUs based on the second resource configuration included in the second configuration. The first resource configuration may be a non-zero power channel state information-reference signal set, the channel state information-reference signal set includes B non-zero power channel state information-reference signals, and the first number of occupied CPUs may be B.

In a possible implementation, after receiving the first indication information, the terminal may determine, based on the first configuration indicated by the first indication information, a number of active channel state information reference resources (active CSI-RS resource) in an active bandwidth part (Bandwidth part, BWP) or a number of active channel state information reference signal ports (active CSI-RS port). In another possible implementation, before receiving the first indication information, the terminal may determine, based on the second configuration, a number of active channel state information reference resources (active CSI-RS resource) in an active bandwidth part (Bandwidth part, BWP) or a number of active channel state information reference signal ports (active CSI-RS port). It may also be understood that, before the first indication information is received, a channel state information-reference signal resource associated with (or included in or indicated by) the first resource configuration in the first configuration or a channel state information-reference signal port associated with (or included in or indicated by) the first resource configuration is in an inactive or invalid state. After the first indication information is received, the channel state information-reference signal resource associated with (or included in or indicated by) the first resource configuration in the first configuration or the channel state information-reference signal port associated with (or included in or indicated by) the first resource configuration is in an active state. Before the first indication information is received, a channel state information-reference signal resource associated with (or included in or indicated by) the second resource configuration in the second configuration or a channel state information-reference signal port associated with (or included in or indicated by) the second resource configuration is in an active state. After the first indication information is received, the channel state information-reference signal resource associated with (or included in or indicated by) the second resource configuration in the second configuration or the channel state information-reference signal port associated with (or included in or indicated by) the second resource configuration is in an inactive or invalid state.

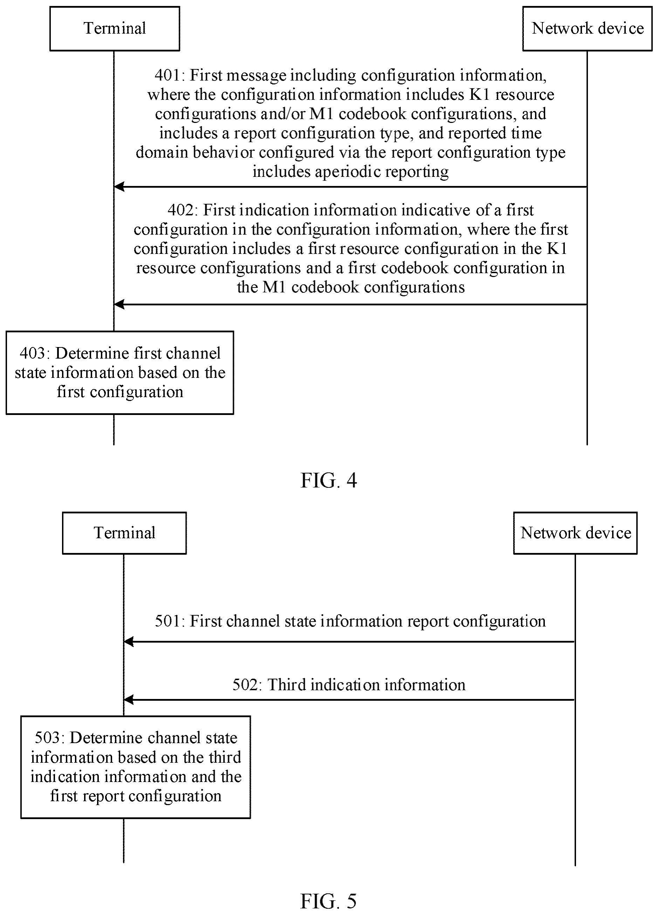

Based on the architecture of the network system shown in FIG. 1 and the content described in the foregoing related technologies, FIG. 4 is an example of a possible schematic flowchart of another communication method according to an embodiment of this application. The method is applicable to a case in which time domain behavior of a report configuration is aperiodic. The method is applicable to a first-type antenna disabling scenario, and is also applicable to a second-type antenna disabling scenario. A solution in FIG. 4 is described by using an example in which a network apparatus and a terminal apparatus interact with each other for execution. A procedure shown in FIG. 1 is described by using an example in which the network apparatus is a network device and the terminal apparatus is a terminal. For related descriptions of the network apparatus and the terminal apparatus, refer to the foregoing content. Details are not described again.

As shown in FIG. 4, the method includes the following steps.

Step 401: The network device sends a first message to the terminal. Correspondingly, the terminal receives the first message.

The first message in this embodiment of this application includes configuration information. The configuration information includes a configuration type and M1 codebook configurations. The report configuration type is used to configure reported time domain behavior, and the time domain behavior is aperiodic reporting.

Optionally, for descriptions of K1 resource configurations, refer to the related descriptions in the embodiment in FIG. 2. Details are not described again. Optionally, for descriptions of the M1 codebook configurations, refer to the related descriptions in the embodiment in FIG. 2. Details are not described again.

For content included in the first message and a specific implementation in which the network device sends the first message, refer to the related descriptions in step 201 in FIG. 2.

Step 402: The network device sends first indication information to the terminal. Correspondingly, the terminal receives the first indication information.

In this embodiment of this application, the first indication information indicates a first configuration in the configuration information, and the first configuration includes a first codebook configuration in the M1 codebook configurations.

In the embodiment shown in FIG. 4, for aperiodic channel state information reporting, a codebook set is configured via the first message, and a specific codebook is indicated to the terminal via the first indication information, so that flexibility of aperiodic channel state information reconfiguration can be improved.

Optionally, the configuration information may further include the K1 resource configurations, and the first configuration indicated by the first indication information may further include a first resource configuration in the K1 resource configurations, where K1 is an integer greater than 1.

In a possible implementation, the first indication information may indicate a first aperiodic channel state information trigger state, and the first aperiodic channel state information trigger state indicates the first resource configuration in the K1 resource configurations and the first codebook configuration in the M1 codebook configurations. The first aperiodic channel state information trigger state is included in a first aperiodic channel state information trigger state list. For example, CSI-AperiodicTriggerStateList includes CSI-AperiodicTriggerState.

Optionally, the first resource configuration specifically has the following several implementations:

Optional implementation 1: The first resource configuration is a configuration of a first non-zero power channel state information-reference signal resource set. For example, the first resource configuration indicates a channel state information-reference signal resource included in the first non-zero power channel state information-reference signal resource set. The first aperiodic channel state information trigger state includes an index of the first non-zero power channel state information-reference signal resource set.

Optional implementation 2: The first resource configuration is a configuration of a first reference signal resource group, and the first reference signal resource group is included in the first non-zero power channel state information resource set. For example, the first resource configuration indicates a channel state information-reference signal resource included in the first reference signal resource group. The first aperiodic channel state information trigger state includes the index of the first non-zero power channel state information resource set and an index of the first reference signal resource group in the first non-zero power channel state information resource set.

Optional implementation 3: The first resource configuration is a configuration of a first channel state information-reference signal resource in the first non-zero power channel state information-reference signal resource set, and the first reference signal resource is included in the first non-zero power channel state information resource set. For example, the first resource configuration includes one or more of the following: a number of channel state information-reference signal resource ports, indication information indicative of a subcarrier occupied by a channel state information-reference signal resource in one PRB (for example, frequencyDomainAllocation), indication information indicative of an OFDM symbol occupied by a channel state information-reference signal resource in one slot (for example, firstOFDMSymbolInTimeDomain, or firstOFDMSymbolInTimeDomain and firstOFDMSymbolInTimeDomain2), indication information indicative of a code division multiplexing type (for example, cdm-Type), indication information indicative of a channel state information-reference signal power control offset, and indication information indicative of a synchronization signal power control offset. The first aperiodic channel state information trigger state includes the index of the first reference signal resource group and the first resource configuration. The terminal receives, based on the first resource configuration, a reference signal on the first reference signal resource included in the first non-zero power channel state information resource set.

Optionally, that the first aperiodic channel state information trigger state indicates the first codebook configuration in the M1 codebook configurations specifically includes the following several implementations:

Optional implementation 1: The first aperiodic channel state information trigger state includes an index of the first codebook configuration. Optionally, the M1 codebook configurations are included in a first channel state information report configuration. For example, CSI-ReportConfig includes M1 pieces of codebookConfig.

Optional implementation 2: The first aperiodic channel state information trigger state includes the first codebook configuration. Optionally, the first channel state information report configuration does not include the M1 codebook configurations.

The first configuration may specifically have several optional implementations. For details, refer to the related content in step 201 in FIG. 2.

In a possible implementation, the first indication information may further indicate a part of configuration information of one RLM configuration (referred to as a first radio link monitoring configuration herein for ease of description), and/or indicate a part of configuration information of one mobility management configuration (referred to as a first mobility management configuration herein for ease of description). Specifically, the first radio link monitoring configuration (RadioLinkMonitoringConfig) may correspond to a plurality of fifth configurations, each fifth configuration includes one list of reference signal resources used for RLM, and the first indication information may indicate one of the plurality of fifth configurations corresponding to the first radio link monitoring configuration. The first mobility management configuration (CSI-RS-ResourceConfigMobility) may correspond to a plurality of sixth configurations, each sixth configuration includes one list of channel state information-reference signal resources used for mobility management, and the first indication information may indicate one of the plurality of sixth configurations for the first mobility management configuration.

In a possible implementation, the first indication information is DCI or a MAC CE. Compared with configuring a channel state information report configuration via an RRC message, configuring a configuration related to channel state information measurement and reporting via DCI or a MAC CE in this embodiment of this application can reduce a delay of the channel state information report configuration.

In a possible implementation, the first indication information is cell-level indication information, and all terminals in a corresponding cell may receive the first indication information. Alternatively, the first indication information may be user group-level indication information, and all terminals in a corresponding user group may receive the first indication information. Compared with user-level (per UE) channel state information report configuration implemented via an RRC message, in this embodiment of this application, signaling overheads of reconfiguring the channel state information report configuration can be reduced.

In a possible implementation, the network device may send a configuration table or indication information of the configuration table (for example, an index of the configuration table) to the terminal. The network device may indicate a first configuration entry in the configuration table via the first indication information. The terminal may obtain, based on the first indication information and the configuration table, the first configuration corresponding to the first channel state information report configuration in the first configuration entry, and determine first channel state information based on the first configuration. For a specific implementation, refer to the related descriptions in step 202 in FIG. 2.

Step 403: The terminal device determines the first channel state information based on the first configuration.

Further, the terminal may send the first channel state information to the network device based on the first configuration. Correspondingly, the network device may receive the first channel state information sent by the terminal.

In this embodiment of this application, a possible implementation in which the terminal determines the first channel state information based on the first configuration is as follows: The terminal may determine the channel state information based on a first reference signal, a second reference signal, and the first configuration. The first reference signal is a reference signal received in S3 (S3 is a positive integer) time units before the first indication information, the second reference signal is a reference signal received after the first indication information, and both the first reference signal and the second reference signal are reference signals received based on the first configuration. Based on the foregoing implementation, in a possible scenario, the terminal may determine the channel state information based on the first reference signal, the second reference signal, and the first configuration. The first reference signal is the reference signal received in the S3 (S3 is a positive integer) time units before the first indication information, the second reference signal is the reference signal received after the first indication information, and both the first reference signal and the second reference signal are the reference signals received based on the first configuration. The S3 time units are included in a first time window, and an end moment of the first time window is a first time unit. Optionally, the first time unit is a time unit that includes a channel state information reference resource. For a definition of the channel state information reference resource, refer to descriptions in TS 38.214. Optionally, the first time unit may be a last time unit that includes the second reference signal and that is before the channel state information reference resource. For the definition of the channel state information reference resource, refer to the descriptions in TS 38.214. Optionally, the first time unit may be a time unit in which the first indication information is received. Optionally, the first time unit is a time unit in which the terminal sends the ACK of the first indication information. Based on the foregoing implementation, another possible scenario is as follows: After receiving the first indication information, the terminal obtains a reference signal received in a first time period before a first moment. It is assumed that H (H is a positive integer) reference signals are received in the first time period. After receiving the first indication information, the terminal receives the second reference signal based on the first configuration. The terminal may determine the channel state information based on the first configuration. Specifically, the terminal may select R (R is a positive integer) first reference signals from the H reference signals, where resource configurations of the R first reference signals are the same as that of the second reference signal. The R first reference signals are included in the S3 time units before the first indication information is received, and the S3 time units are included in the first time period. The terminal determines the channel state information based on the R first reference signals, the second reference signal, and the first configuration.

Optionally, the terminal may send capability information to the network device, to indicate whether the terminal has a capability of measuring the channel state information based on the first reference signal received before the first indication information is received (for example, the R first reference signals that are in the H first reference signals and that are received before the first indication information). Further, the capability information may be a length of one first time window, or a parameter for determining the length of the first time window.

In this embodiment of this application, another possible implementation in which the terminal determines the first channel state information based on the first configuration is as follows: The terminal may determine the channel state information based on the first configuration and a reference signal received after the first indication information. The reference signal is a reference signal received based on the first configuration. In other words, after receiving the first indication information, the terminal measures the channel state information based on the channel state information-reference signal received after the first indication information is received.

In this embodiment of this application, a specific implementation in which the terminal determines the first channel state information based on the first configuration is applicable to a scenario in which the terminal is configured to perform a filtering operation. In a possible implementation, the configuration information in the first message further includes a parameter indicating a time restriction for channel measurement or interference measurement (for example, timeRestrictionForChannelMeasurements and timeRestrictionForInterferenceMeasurements), and the terminal may be configured to perform the filtering operation by using the parameter.

In a possible implementation, a number of CPUs occupied when the terminal determines the channel state information based on the first configuration indicated by the first indication information may be determined based on the first configuration. For a specific implementation, refer to the foregoing embodiment.

In a possible implementation, the first indication information in S402 in FIG. 4 may alternatively not indicate the first codebook. Details are described below.

S4011: The network device sends a first message to the terminal, where the first message includes configuration information, and the configuration information includes K1 resource configurations and M1 codebook configurations.

S4021: The network device sends first indication information to the terminal. Correspondingly, the terminal receives the first indication information. The first indication information indicates a first resource configuration in the K1 resource configurations.

S4031: The terminal device determines first channel state information based on a first configuration and a first codebook configuration. The first codebook configuration is a default codebook configuration in the M1 codebook configurations. S4032 may also be understood as that when the first indication information received by the terminal includes the first resource configuration but does not include any codebook configuration, the terminal determines channel state information based on the first resource configuration and a default codebook configuration.

In this case, the following is a specific form of the first indication information:
The first indication information indicates a first aperiodic channel state information trigger state, and the first aperiodic channel state information trigger state includes an index of a first non-zero power channel state information-reference signal resource set. The terminal determines the first configuration based on the first aperiodic trigger state, where the first configuration includes the first resource configuration and the first codebook configuration, and the first resource configuration is a configuration of the first non-zero power channel state information-reference signal resource set. For example, the first resource configuration indicates a channel state information-reference signal resource included in the first non-zero power channel state information-reference signal resource set. The first codebook configuration is a default codebook configuration, or the first codebook configuration is a codebook configuration included in a first channel state information report configuration. After receiving the first indication information, if determining that the first indication information does not include the first codebook configuration (the first aperiodic channel state information trigger state includes the first codebook configuration), the terminal measures and reports the channel state information based on the first codebook configuration.

Based on the architecture of the network system shown in FIG. 1 and the content described in the foregoing related technologies, FIG. 5 is an example of a possible schematic flowchart of another communication method according to an embodiment of this application. The method is applicable to a case in which time domain behavior of a report configuration is periodic or semi-persistent. The method is applicable to a second-type antenna disabling scenario. A solution in FIG. 5 is described by using an example in which a network apparatus and a terminal apparatus interact with each other for execution. A procedure shown in FIG. 1 is described by using an example in which the network apparatus is a network device and the terminal apparatus is a terminal. For related descriptions of the network apparatus and the terminal apparatus, refer to the foregoing content. Details are not described again.

As shown in FIG. 5, the method includes the following steps.

Step 501: The network device sends a first channel state information report configuration to the terminal. Correspondingly, the terminal receives the first channel state information report configuration.

The first channel state information report configuration may be associated with a first channel state information resource configuration, and the first channel state information configuration indicates a first channel state information-reference signal resource.

In this embodiment of this application, for the first channel state information report configuration, refer to descriptions in a related communication protocol. In a possible implementation, the first channel state information report configuration may be CSI-ReportConfig in the foregoing related technology description.

Step 502: The network device sends third indication information to the terminal. Correspondingly, the terminal receives the third indication information.

In this embodiment of this application, the third indication information may indicate reconfiguration of the first channel state information report configuration, and a reconfigured first channel state information report configuration is completely the same as that before the reconfiguration.

In a possible implementation, the third indication information may be 1-bit information. For example, when the bit is set to 1, it indicates that the first channel state information report configuration is reconfigured. For another example, the terminal compares a value of the 1-bit third indication information with a value of 1-bit first indication information received last time. If the values are different, the terminal may determine that the first channel state information report configuration is reconfigured. Otherwise, it may be determined that the first channel state information report configuration is not reconfigured. According to this method, reconfiguration overheads of the first channel state information report configuration can be reduced.

In a possible implementation, the third indication information is DCI or a MAC CE. Compared with configuring a channel state information report configuration via an RRC message, performing reconfiguration of channel state information measurement and reporting via DCI or a MAC CE in this embodiment of this application can reduce a delay of reconfiguring the channel state information report configuration.

In a possible implementation, the third indication information is cell-level indication information, and all terminals in a corresponding cell may receive the third indication information. Alternatively, the third indication information may be user group-level indication information, and all terminals in a corresponding user group may receive the third indication information. Compared with reconfiguration of a user-level (per UE) channel state information report configuration implemented via an RRC message, in this embodiment of this application, signaling overheads of reconfiguring the channel state information report configuration can be reduced.

Step 503: The terminal determines channel state information based on the third indication information and the first report configuration.

Further, the terminal may send the channel state information to the network device based on a first configuration. Correspondingly, the network device may receive the channel state information sent by the terminal.

In a possible implementation, the terminal may receive H (H is a positive integer) first channel state information-reference signals on the first channel state information-reference signal resource, and determine the channel state information based on R (R is a positive integer) first channel state information-reference signals that are in the H first channel state information-reference signals and that are received after the third indication information is received. Based on this implementation, after receiving the third indication information, the terminal measures the channel state information based on only the channel state information-reference signal received after the third indication information is received. This implementation is applicable to a scenario in which the terminal is configured to perform a filtering operation.

In a possible implementation, after receiving the third indication information, if the UE receives, before a channel state information reference resource, at least one channel state information-reference signal transmission occasion used for channel measurement and a channel state information-reference signal used for interference measurement and/or a channel state information-interference measurement occasion, the UE determines the channel state information based on the first channel state information report configuration. Otherwise, the terminal device does not determine the channel state information based on the first report configuration. In other words, if the terminal receives, within a time period from a moment at which the third indication information is received to a moment at which the channel state information reference resource is received, the at least one channel state information-reference signal transmission occasion used for channel measurement and the channel state information-reference signal used for interference measurement and/or channel state information-interference measurement, the terminal determines the channel state information based on the first report configuration. Otherwise, the terminal device does not determine the channel state information based on the first report configuration.

It may be understood that, to implement the functions in the foregoing embodiments, the network device and the terminal include corresponding hardware structures and/or software modules for performing each function. A person skilled in the art should easily be aware that, in combination with units and method steps of the examples described in embodiments disclosed in this application, this application can be implemented by hardware or a combination of hardware and computer software. Whether a function is performed by hardware or hardware driven by computer software depends on particular application scenarios and design constraints of the technical solutions.

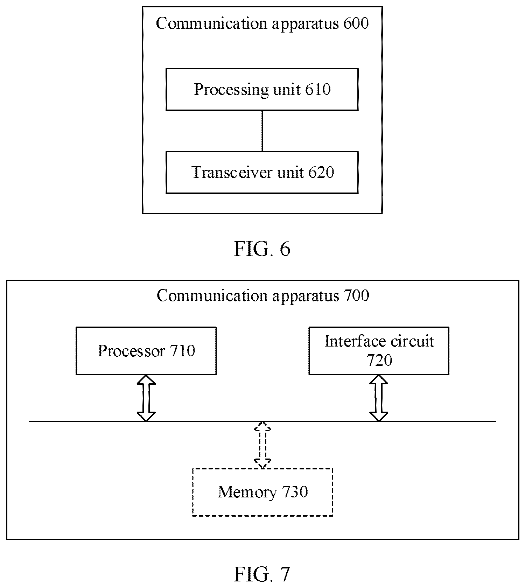

FIG. 6 and FIG. 7 are diagrams of structures of possible communication apparatuses according to embodiments of this application. These communication apparatuses may be configured to implement functions of the terminal or the network device in the foregoing method embodiments, and therefore can also implement beneficial effect of the foregoing method embodiments. In embodiments of this application, the communication apparatus may be one of the terminals 120a to 120j shown in FIG. 1, or may be the base station 110a or 110b shown in FIG. 1, or may be a module (for example, a chip) used in the terminal or the base station.

As shown in FIG. 6, a communication apparatus 600 includes a processing unit 610 and a transceiver unit 620. The communication apparatus 600 is configured to implement a function of the terminal or the network device in the method embodiment shown in FIG. 2, FIG. 4, or FIG. 5.

When the communication apparatus 600 is configured to implement the function of the terminal in the method embodiment shown in FIG. 2, the transceiver unit 620 is configured to: receive a first message, where the first message includes configuration information including K1 resource configurations and/or M1 codebook configurations, the configuration information includes a report configuration type, the report configuration type is used to configure reported time domain behavior including periodic reporting or semi-persistent reporting; and receive first indication information, where the first indication information indicates a first configuration in the configuration information; and the first configuration includes a first resource configuration in the K1 resource configurations, and/or the first configuration includes a first codebook configuration in the M1 codebook configurations; and the processing unit 610 is configured to determine first channel state information based on the first configuration.

When the communication apparatus 600 is configured to implement the function of the terminal in the method embodiment shown in FIG. 4, the transceiver unit 620 is configured to: receive a first message, where the first message includes configuration information including K1 resource configurations and/or M1 codebook configurations, the configuration information includes a report configuration type, the report configuration type is used to configure reported time domain behavior including aperiodic reporting; and receive first indication information, where the first indication information indicates a first configuration in the configuration information; and the first configuration includes a first resource configuration in the K1 resource configurations, and the first configuration includes a first codebook configuration in the M1 codebook configurations; and the processing unit 610 is configured to determine first channel state information based on the first configuration.

When the communication apparatus 600 is configured to implement the function of the terminal in the method embodiment shown in FIG. 5, the transceiver unit 620 is configured to: receive a first channel state information report configuration, and receive third indication information; and the processing unit 610 is configured to determine channel state information based on the third indication information and the first report configuration.

When the communication apparatus 600 is configured to implement the function of the network device in the method embodiment shown in FIG. 2, the processing unit 610 is configured to: send a first message to a terminal by using the transceiver unit 620, where the first message includes configuration information including K1 resource configurations and/or M1 codebook configurations, the configuration information includes a report configuration type, the report configuration type is used to configure reported time domain behavior including periodic reporting or semi-persistent reporting; and send first indication information to the terminal by using the transceiver unit 620, where the first indication information indicates a first configuration in the configuration information; and the first configuration includes a first resource configuration in the K1 resource configurations, and/or the first configuration includes a first codebook configuration in the M1 codebook configurations; and the transceiver unit 620 is configured to receive first channel state information determined by the terminal based on the first configuration.

When the communication apparatus 600 is configured to implement the function of the network device in the method embodiment shown in FIG. 4, the processing unit 610 is configured to: send a first message to a terminal by using the transceiver unit 620, where the first message includes configuration information including K1 resource configurations and/or M1 codebook configurations, the configuration information includes a report configuration type, the report configuration type is used to configure reported time domain behavior including aperiodic reporting; and send first indication information to the terminal by using the transceiver unit 620, where the first indication information indicates a first configuration in the configuration information; and the first configuration includes a first resource configuration in the K1 resource configurations, and the first configuration includes a first codebook configuration in the M1 codebook configurations; and the processing unit 610 is configured to receive first channel state information determined by the terminal based on the first configuration.

When the communication apparatus 600 is configured to implement the function of the network device in the method embodiment shown in FIG. 5, the processing unit 610 is configured to: send a first channel state information report configuration to a terminal by using the transceiver unit 620, and send third indication information to the terminal by using the transceiver unit 620; and the transceiver unit 620 is configured to receive channel state information that is sent by the terminal and that is determined based on the third indication information and the first report configuration.

For more detailed descriptions about the processing unit 610 and the transceiver unit 620, refer directly to the related descriptions in the method embodiment shown in FIG. 2, FIG. 4, or FIG. 5. Details are not described herein again.

As shown in FIG. 7, a communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to store instructions executed by the processor 710, store input data required by the processor 710 to run the instructions, or store data generated after the processor 710 runs the instructions.

When the communication apparatus 700 is configured to implement the method shown in FIG. 2, FIG. 4, or FIG. 5, the processor 710 is configured to implement a function of the processing unit 610, and the interface circuit 720 is configured to implement a function of the transceiver unit 620.

When the communication apparatus is a chip used in the terminal, the chip in the terminal implements a function of the terminal in the foregoing method embodiment. The chip in the terminal receives information from another module (for example, a radio frequency module or an antenna) in the terminal, where the information is sent by the network device to the terminal; or the chip in the terminal sends information to another module (for example, a radio frequency module or an antenna) in the terminal, where the information is sent by the terminal to the network device.

When the communication apparatus is a module used in the network device, the module in the network device implements a function of the network device in the foregoing method embodiment. The module in the network device receives information from another module (for example, a radio frequency module or an antenna) in the network device, where the information is sent by the terminal to the network device; or the module in the network device sends information to another module (for example, a radio frequency module or an antenna) in the network device, where the information is sent by the network device to the terminal. The module in the network device herein may be a baseband chip of the network device, or may be a DU or another module. The DU herein may be a DU in an open radio access network (open radio access network, O-RAN) architecture.

It may be understood that the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor or the like.

In this application, another example of an apparatus is provided. The notification apparatus includes at least one processor and at least one memory. The at least one processor is coupled to the at least one memory. The at least one memory is configured to store instructions. When the instructions are executed by the at least one processor, the communication apparatus is caused to perform the method in the foregoing embodiment. For example, the communication apparatus includes one processor and one memory. As shown in FIG. 7, the communication apparatus 700 includes one processor 710 and one memory 730. The processor 710 is coupled to the memory 730. The memory 730 stores instructions. When the instructions stored in the memory 730 are executed by the processor 710, the communication apparatus 700 performs the method performed by the network device in the foregoing embodiment.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or a storage medium in any other form well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the network device or the terminal. The processor and the storage medium may alternatively exist in the network device or the terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or a part of the procedures or functions in embodiments of this application are performed. The computer may be a general-purpose computer, a special-purpose computer, a computer network, a network device, user equipment, or another programmable apparatus. The computer programs or instructions may be stored in a computer-readable storage medium or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by a computer, or a data storage device, for example, a server or a data center, integrating one or more usable media. The usable medium may be a magnetic medium, for example, a floppy disk, a hard disk, or a magnetic tape, or may be an optical medium, for example, a digital video disc, or may be a semiconductor medium, for example, a solid-state disk. The computer-readable storage medium may be a volatile or nonvolatile storage medium, or may include two types of storage media: a volatile storage medium and a nonvolatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between associated objects; and in a formula in this application, the character "/" indicates a "division" relationship between associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, wherein the method comprises:
receiving a first channel state information report configuration comprising configuration information, wherein the configuration information comprises K1 resource configurations, and K1 is an integer greater than 1; and when numbers of channel state information-reference signal resource ports respectively indicated by the K1 resource configurations are different, the configuration information further comprises M1 codebook configurations; or when the numbers of channel state information-reference signal resource ports respectively indicated by the K1 resource configurations are the same, and each of the K1 resource configurations indicates a channel measurement reference signal resource group, the configuration information does not comprise the M1 codebook configurations, wherein M1 is an integer greater than 1;
receiving first indication information indicative of a first configuration in the configuration information, wherein the first configuration comprises at least the former of a first resource configuration in the K1 resource configurations and a first codebook configuration in the M1 codebook configurations; and
determining first channel state information based on the first configuration.

2. The method according to claim 1, wherein the first configuration comprises the first resource configuration in the K1 resource configurations and the first configuration comprises the first codebook configuration in the M1 codebook configurations, and the first resource configuration comprises indication information indicative of an activated port in the channel state information-reference signal resource ports.

3. The method according to claim 1 or 2, wherein the first codebook configuration comprises N1, N2, and a codebook subset, and the codebook subset is a subset in a codebook set.

4. The method according to any one of claims 1 to 3, wherein the first resource configuration indicates one or more of the following:
information indicative of a non-zero power channel state information-reference signal resource set;
information indicative of a channel measurement resource group, wherein the channel measurement resource group is one or more channel resource groups in the non-zero power channel state information-reference signal resource set, and the channel measurement resource group comprises one or more reference signal resources;
information indicative of a number of ports;
information indicative of a subcarrier occupied by a channel state information-reference signal resource in one physical resource block PRB;
information indicative of a symbol occupied by a channel state information-reference signal resource in one slot;
information indicative of a code division multiplexing type;
information indicative of a channel state information-reference signal power control offset; and
information indicative of a synchronization signal power control offset.

5. The method according to any one of claims 1 to 4, wherein the method further comprises: determining, based on the first configuration, a number of channel state information processing unit CPUs occupied for processing the first channel state information.

6. The method according to any one of claims 1 to 5, wherein the first indication information is received at a moment T0, and the method further comprises:
determining channel state information based on a second configuration in S1 time units after the moment T0, wherein S1 is an integer greater than or equal to 0; or
determining the channel state information based on the second configuration in S1 time units after a moment T1, wherein S1 is an integer greater than or equal to 0, and the moment T1 is a moment for sending acknowledgment information of the first indication information, wherein
the second configuration comprises a second resource configuration in the K1 resource configurations, and/or the second configuration comprises a second codebook configuration in the M1 codebook configurations.

7. The method according to claim 6, wherein the second resource configuration is a default resource configuration in the K1 resource configurations, and the second codebook configuration is a default codebook configuration in the M1 codebook configurations; or the second configuration is indicated by second indication information, and a receiving time of the second indication information is earlier than that of the first indication information.

8. The method according to claim 6 or 7, wherein the determining the channel state information based on the first configuration comprises:
determining the first channel state information based on the first configuration after S1+S2 time units after the moment T0, wherein S2 is an integer greater than or equal to 0; or
determining the first channel state information based on the first configuration after S1+S2 time units after the moment T1, wherein S2 is an integer greater than or equal to 0.

9. The method according to claim 8, wherein the method further comprises:
skipping measuring the channel state information from the S1 time units to the S1+S2 time units after the moment T0; or
skipping measuring the channel state information from the S1 time units to the S1+S2 time units after the moment T1.

10. The method according to any one of claims 1 to 9, wherein the determining the first channel state information based on the first configuration comprises:
determining the first channel state information based on a first reference signal, a second reference signal, and the first configuration, wherein the first reference signal is a reference signal received in S3 time units before the first indication information, the second reference signal is a reference signal received after the first indication information, both the first reference signal and the second reference signal are reference signals received based on the first configuration, and S3 is a positive integer.

11. The method according to any one of claims 1 to 10, wherein the first indication information further indicates a third configuration comprising a third resource configuration and/or a third codebook configuration, and the method further comprises:
determining second channel state information based on the third configuration.

12. A communication method, wherein the method comprises:
sending a first channel state information report configuration comprising configuration information, wherein the configuration information comprises K1 resource configurations, K1 is an integer greater than 1, and M1 is an integer greater than 1; and when numbers of channel state information-reference signal resource ports respectively indicated by the K1 resource configurations are different, the configuration information further comprises M1 codebook configurations; or when the numbers of channel state information-reference signal resource ports respectively indicated by the K1 resource configurations are the same, and each of the K1 resource configurations indicates a channel measurement reference signal resource group, the configuration information does not comprise the M1 codebook configurations; and
sending first indication information indicative of a first configuration in the configuration information, wherein the first configuration comprises at least the former of a first resource configuration in the K1 resource configurations and a first codebook configuration in the M1 codebook configurations.

13. The method according to claim 12, wherein the first configuration comprises the first resource configuration in the K1 resource configurations and the first configuration comprises the first codebook configuration in the M1 codebook configurations, and the first resource configuration comprises indication information indicative of an activated port in the channel state information-reference signal resource ports.

14. The method according to claim 12 or 13, wherein the first codebook configuration comprises N1, N2, and a codebook subset, and the codebook subset is a subset in a codebook set.

15. The method according to any one of claims 12 to 14, wherein the first resource configuration indicates one or more of the following:
information indicative of a non-zero power channel state information-reference signal resource set;
information indicative of a channel measurement resource group, wherein the channel measurement resource group is one or more channel resource groups in the non-zero power channel state information-reference signal resource set, and the channel measurement resource group comprises one or more reference signal resources;
information indicative of a number of ports;
information indicative of a subcarrier occupied by a channel state information-reference signal resource in one physical resource block PRB;
information indicative of a symbol occupied by a channel state information-reference signal resource in one slot;
information indicative of a code division multiplexing type;
information indicative of a channel state information-reference signal power control offset; and
information indicative of a synchronization signal power control offset.

16. The method according to any one of claims 12 to 15, wherein before sending the first indication information, the method further comprises:
sending the second indication information indicative of a second configuration; and the second configuration comprises a second resource configuration in the K1 resource configurations, and/or the second configuration comprises a second codebook configuration in the M1 codebook configurations.

17. The method according to claim 15 or 16, wherein the first indication information further indicates a third configuration comprising a third resource configuration and/or a third codebook configuration.

18. A communication apparatus, comprising a processing unit and a transceiver unit, wherein
the transceiver unit is configured to: receive a first channel state information report configuration comprising configuration information, wherein the configuration information comprises K1 resource configurations, and K1 is an integer greater than 1; and when numbers of channel state information-reference signal resource ports respectively indicated by the K1 resource configurations are different, the configuration information further comprises M1 codebook configurations; or when the numbers of channel state information-reference signal resource ports respectively indicated by the K1 resource configurations are the same, and each of the K1 resource configurations indicates a channel measurement reference signal resource group, the configuration information does not comprise the M1 codebook configurations, wherein M1 is an integer greater than 1; and
receive first indication information indicative of a first configuration in the configuration information, wherein the first configuration comprises at least the former of a first resource configuration in the K1 resource configurations and a first codebook configuration in the M1 codebook configurations; and
the processing unit is configured to determine first channel state information based on the first configuration.

19. A communication apparatus, comprising a processing unit and a transceiver unit, wherein
the processing unit is configured to: send a first message by using the transceiver unit, wherein the first message comprises configuration information comprising K1 resource configurations, and K1 is an integer greater than 1; and when numbers of channel state information-reference signal resource ports respectively indicated by the K1 resource configurations are different, the configuration information further comprises M1 codebook configurations; or when the numbers of channel state information-reference signal resource ports respectively indicated by the K1 resource configurations are the same, and each of the K1 resource configurations indicates a channel measurement reference signal resource group, the configuration information does not comprise the M1 codebook configurations, wherein M1 is an integer greater than 1; and
send first indication information by using the transceiver unit, wherein the first indication information indicates a first configuration in the configuration information, and the first configuration comprises at least the former of a first resource configuration in the K1 resource configurations and a first codebook configuration in the M1 codebook configurations.

20. A communication apparatus, comprising a unit or module configured to perform the method according to any one of claims 1 to 11, or comprising a unit or module configured to perform the method according to any one of claims 12 to 17.

21. A communication apparatus, comprising one or more processors and one or more memories, wherein the one or more memories store one or more programs, and when the program is executed by the one or more processors, the apparatus is caused to perform the method according to any one of claims 1 to 11, or perform the method according to any one of claims 12 to 17.

22. A chip system, wherein the chip system comprises at least one chip and a memory, and the at least one chip is configured to: read and execute a program stored in the memory, to implement the method according to any one of claims 1 to 11, or implement the method according to any one of claims 12 to 17.

23. A readable storage medium, wherein the readable storage medium comprises a program, and when the program is run on an apparatus, the apparatus is caused to perform the method according to any one of claims 1 to 11, or perform the method according to any one of claims 12 to 17.

24. A program product, wherein when the program product runs on an apparatus, the apparatus is caused to perform the method according to any one of claims 1 to 11, or perform the method according to any one of claims 12 to 17.
